# EUROPÄISCHE PATENTSCHRIFT

(11) **EP 3 568 633 B1**
(45) Veröffentlichungstag und Bekanntmachung des Hinweises auf die Patenterteilung: **29.12.2021**
(21) Anmeldenummer: 18707654.2
(22) Anmeldetag: 15.02.2018
(51) Int. Cl.: F21V 3/04, F21V 5/00, F21V 5/04, F21S 43/20

(54) **LEUCHTE UMFASSEND EINE LINSE MIT EINER MEHRZAHL VON STEGEN**
LUMINAIRE INCLUDING A LENS WITH MULTIPLE RODS
LUMINAIRE COMPRENANT UNE LENTILLE AVEC PLUSIEURS BARETTES

(30) Priorität: 16.02.2017 DE 102017103253
(43) Veröffentlichungstag der Anmeldung: 20.11.2019
(73) Patentinhaber: Arev Lighting GmbH, 53757 Sankt Augustin (DE)
(72) Erfinder: MAKOSCH, Gerhard, 53757 Sankt Augustin (DE)
(74) Vertreter: Geskes, Christoph
(86) Internationale Anmeldenummer: PCT/EP2018/053807
(87) Internationale Veröffentlichungsnummer: WO 2018/149928

(56) Entgegenhaltungen:
- DE-A1- 10 254 371
- DE-U1- 9 111 057
- GB-A- 2 447 558
- US-A1- 2005 007 784
- US-A1- 2012 188 767
- US-B1- 9 239 288

## Beschreibung

Die vorliegende Erfindung betrifft eine Leuchte umfassend eine Linse als auch ein Verfahren zur Abgabe von Licht mit einer solchen Leuchte.

Bekannte Leuchten, die bevorzugt an Transport- und/oder Transporthilfsmitteln wie Lastkraftwagen und/oder Anhängern, aber auch elektrischen Rollstühlen oder ähnlichem und besonders bevorzugt an deren Heck als Rückleuchte angebracht sind, sind oftmals vertieft in eine Fahrzeugwand eingelassen und schließen im Wesentlichen bündig mit einer Linse der Leuchte und der Fahrzeugwand ab. Weitere bekannte Leuchten weisen auf einer Linse Fixierungen wie Verschraubungen auf, die die Linse an dem übrigen Gehäuse und/oder an der Fahrzeugwand befestigen.

Derartige bekannte Leuchten strahlen im Wesentlichen rechtwinklig zur Ebene der Linse, wodurch die Leuchten bevorzugt für die Sichtbarkeit, Sehen und Gesehen werden, von Personen, Tieren und/oder Gegenständen geeignet sind, die sich in diesem Lichtkegel befinden. Diese bekannten Leuchten sind nicht geeignet, um über einen Grenzstrahlungswinkel von 70° hinaus zu strahlen. Der Grenzstrahlungswinkel beschreibt die gesamte Strahlung in einer Achse. Diesem gegenüber steht der Abschirmwinkel, der den Bereich definiert, in dem keine Strahlung der Leuchte auftritt. In Summe ergeben Grenzstrahlungswinkel und Abschirmwinkel einen Winkel β von 90°. Auch ist in bekannten Leuchten die Intensität der Strahlung beziehungsweise des Lichtes durch störende Elemente wie beispielsweise Verschraubungen o.ä. auf Linsen der Leuchte negativ beeinflusst. Zudem wäre bei einem vertieften Einbau ein nahezu bündiger Abschluss mit einer umgebenden Fahrzeugwand oftmals wünschenswert.

DE 91 11 057 U1 offenbart eine Rundumkennleuchte, die zur vertikalen Auffächerung des Lichtes auf einer Außenfläche einer Lichthaube Ringprismen aufweist.

GB 2 447 558 A offenbart eine Leuchtbake, die im Inneren eines Gehäuses eine Mehrzahl von Stegen aufweist.

US 2005/007784 A1 offenbart eine Leuchte mit drei rotierbaren Leuchtmittelen.

DE 102 54 371 A1 offenbart eine Rundumkennleuchte, bei der Licht einer Lichtquelle durch wenigstens ein torisch oder kegelförmig abgestuftes Bauelement in eine Ringzone geleitet wird.

US 2012/0188767 A1 offenbart eine Leuchte mit einer Mehrzahl von LEDs und einer Linse, die sich in einer Ausführungsform kuppelförmig um die LEDs herum erstreckt.

US 9,239,288 B1 offenbart eine Leuchte mit einem modularen Aufbau aus einer Grundplatte, einer Platine, einem Reflektoreinsatz und einer Linse.

Aufgabe der vorliegenden Erfindung ist es, eine Leuchte zur Verfügung zu stellen, die die vorstehenden Nachteile nicht aufweist.

Diese Aufgabe wird erfindungsgemäß gelöst durch eine Leuchte gemäß Anspruch 1, eine Linse gemäß Anspruch 11 und ein Verfahren zur Abgabe von Licht einer derartigen Leuchte gemäß Anspruch 12.

Die erfindungsgemäße Leuchte umfassend mindestens ein Leuchtmittel, einen Reflektoreinsatz, umfassend mindestens eine in diesen teilweise oder vollständig eingelassene Kammer, als auch eine Linse, wobei die Linse mindestens einen Kopfteil, einen Übergangsbereich und einen Seitenteil aufweist, wobei der Kopfteil der Linse ein Reflektorband umfasst, das mittig über dem Kopfteil verläuft, und die Linse mindestens im Übergangsbereich, der den Kopfteil mit dem Seitenteil der Linse verbindet, eine Mehrzahl von Stegen umfasst, die sich mit ihrer Längserstreckung im Wesentlichen vom Seitenteil in Richtung des Kopfteils erstrecken, wobei die Stege eine Steginnenseite und eine Stegaußenseite umfassen, die gegenüberliegend angeordnet sind, wobei die Steginnenseite konvex und die Stegaußenseite konkav ausgebildet ist.

Wird im Rahmen der Erfindung der Begriff "etwa" oder "im Wesentlichen" im Bezug auf Werte oder Wertebereiche verwendet, ist hierunter dasjenige zu verstehen, was der Fachmann in dem gegebenen Zusammenhang als fachmännisch üblich ansehen wird. Insbesondere sind Abweichungen der angegebenen Werte von +/- 10%, bevorzugt +/- 5%, von den Begriffen "etwa" und "im Wesentlichen" umfasst.

Der Grenzstrahlungswinkel, der mit dem Abschirmwinkel einen Winkel β von 90°ergibt, liegt bevorzugt in einem Bereich von etwa 70° bis etwa 110°, weiter bevorzugt in einem Bereich von etwa 80° bis etwa 95° und besonders bevorzugt in einem Bereich von etwa 85° bis etwa 90°.

In einer bevorzugten Ausführungsform ist der Seitenteil der Linse in etwa wie eine Mantelseite eines Zylinders gebildet. Bevorzugt bilden eine Kopfinnenfläche, eine Übergangsinnenfläche und/oder eine Seiteninnenfläche eine Innenfläche der Linse. Die Innenfläche bildet bevorzugt einen einseitig offenen Hohlraum im Linseninneren. Die Kopfinnenfläche ist eine innenliegende Fläche des Kopfteils, die Übergangsinnenfläche eine solche des Übergangsbereiches und die Seiteninnenfläche eine solche des Seitenteils. Bevorzugt ist die Linse rotationssymmetrisch, bevorzugt kreisrund, ausgebildet.

Der Kopfteil, der Übergangsbereich und/oder der Seitenteil der Linse sind vorzugsweise teilweise und besonders bevorzugt vollständig aus einem lichtdurchlässigen Material wie Kunststoff ausgebildet. Besonders bevorzugt ist die Linse aus Acryl ausgebildet. Weiter bevorzugt sind mehrere Stegen und besonders bevorzugt alle Stege aus einem lichtdurchlässigen Kunststoff ausgebildet.

Vorzugsweise ist die Linse im Bereich des Seitenteils, des Übergangsbereiches und/oder des Kopfteils mehrschichtig ausgebildet. Besonders bevorzugt ist die Linse im Bereich des Seitenteils und des Übergangsbereiches mehrschichtig und im Bereich des Kopfteils einschichtig ausgebildet. Bevorzugt umfasst die Linse zumindest im Bereich des Seitenteils und/oder des Übergangsbereiches eine innere Linsenschicht und eine äußere Linsenschicht. Weiter bevorzugt umfasst die Linse die innere Linsenschicht, mindestens eine mittlere Linsenschicht und die äußere Linsenschicht. In einer bevorzugten Ausführungsform ist die Mehrzahl von Stegen von der inneren Linsenschicht umfasst. Weiter bevorzugt bilden die Stege die innere Linsenschicht. Bevorzugt ist die mittlere Linsenschicht oder weiter bevorzugt sind die mittleren Linsenschichten seitlich von der äußeren Linsenschicht und der inneren Linsenschicht umschlossen. Bevorzugt grenzt die innere Linsenschicht an den offenen Hohlraum im Linseninneren an. Bevorzugt ist die äußere Linsenschicht eine dem Hohlraum abgewandte Schicht der Linse.

Vorzugsweise ist zwischen der äußeren Linsenschicht oder bei Vorsehung von mindestens einer mittleren Linsenschichte eine der mittleren Linsenschichten, die an die innere Linsenschicht und somit an die Stege angrenzt, und der inneren Linsenschicht, gebildet aus den Stegen, ein Zwischenraum angeordnet. Bevorzugt ist der Zwischenraum im Wesentlichen durch die welligen beziehungsweise durch die konkaven Stegaußenseiten gebildet. Der Zwischenraum besteht bevorzugt aus Vollmaterial, das bevorzugt bei der Herstellung zwischen die innere Linsenschicht und die äußerer Linsenschicht beziehungsweise die eine mittlere Linsenschicht gegossen ist. Alternativ ist der Zwischenraum materialfrei und bildet einen Freiraum zwischen der inneren Linsenschicht, gebildet aus den Stegen, und der einen hieran angrenzenden mittleren oder äußeren Linsenschicht.

Vorzugsweise sind die Linsenschichten miteinander verpresst. Die Linsenschichten werden bevorzugt separat hergestellt. Bevorzugt ist mindestens eine Linsenschicht gegossen. Weiter bevorzugt sind mehrere der Linsenschichten separat und bevorzugt zeitlich versetzt gegossen. Besonders bevorzugt sind alle Linsenschichten separat und bevorzugt zeitlich versetzt gegossen. In einer besonders bevorzugten Ausführungsform weist die Linse ausgehend von einer inneren Linsenschicht bis zu einer äußeren Linsenschicht im Wesentlichen durchgängig Material auf.

In einer bevorzugten Ausführungsform ist der Übergangsbereich bevorzugt teilweise und besonders bevorzugt vollständig abgerundet ausgebildet. Die bevorzugte Abrundung verläuft ausgehend vom Kopfteil bis zum Seitenteil und entlang einer Übergangsaußenfläche des Übergangsbereiches und weiter bevorzugt über die Übergangsinnenfläche, wobei die Übergangsaußenfläche des Übergangsbereiches der Übergangsinnenfläche abgewandt angeordnet ist. Die Übergangsaußenfläche weist bevorzugt keine Stege auf und hat weiter bevorzugt im Wesentlichen eine glatte Struktur. Die Übergangsaußenfläche des Übergangsbereiches ist zumindest teilweise von der äußeren Linsenschicht gebildet. Ein Teilbereich des Übergangsbereiches kann von der bevorzugt einschichtigen Kopffläche gebildet sein. Bevorzugt sind die Stege über die Übergangsaußenfläche optisch durch diese hindurch zu sehen. Die Längserstreckung des Übergangsbereiches verläuft bevorzugt rund umlaufend um den Kopfteil und weiter bevorzugt angrenzend zu einem oberen Endbereich des Seitenteils. Mindestens im Übergangsbereich ist erfindungsgemäß die Mehrzahl von Stegen angeordnet. Bevorzugt ist die Mehrzahl von Stegen nebeneinander anordnet. Die Stege sind bevorzugt auf der Innenfläche der Linse ausgebildet, wobei die Innenfläche mindestens der Übergangsinnenfläche des Übergangsbereiches zugeordnet ist. Die Anordnung der Stege, die bevorzugt nebeneinander und besonders bevorzugt unmittelbar aneinander folgend ist, ist bevorzugt wellenförmig. Die Stege weisen eine Steginnenseite und eine dieser abgewandte Stegaußenseite auf. Bevorzugt weist die Steginnenseite und/oder die Stegaußenseite über deren Fläche eine wellige Form auf. Besonders bevorzugt weist die Stegaußenseite eine wellige Form im Übergangsbereich auf.

Die Steginnenseite ist dem Hohlraum im Linseninneren zugewandt. Erfindungsgemäß ist die Steginnenseite konvex und die Stegaußenseite konkav ausgebildet. Weiter bevorzugt weisen die Stege über die Steginnenseite und die Stegaußenseite eine konvex-konkave-Linsenform auf. Bevorzugt weist die Steginnenseite einen ersten Radius (r₁) und weiter bevorzugt die Stegaußenseite einen zweiten Radius (r₂) auf. Mit der bevorzugt unmittelbar aneinander folgenden Anordnung der Stege ist eine Mehrzahl von Wellen aneinander folgend gebildet. Weiter bevorzugt laufen die Steginnenseiten an einem Tiefpunkt zwischen jedem der Stege im Wesentlichen spitz zusammen. In einer bevorzugten Ausführungsform unterscheiden sich die Radien der Steginnenseite und die der Stegaußenseite von einander. Weiter bevorzugt ist der erste Radius (r₁) der Steginnenseite kleiner als der zweite Radius (r₂) der Stegaußenseite. Durch den kleineren ersten Radius (r₁) der Steginnenseite ist deren Krümmung beziehungsweise die Wellenform ausgeprägter als die Krümmung der Stegaußenseite.

Das Seitenteil der Linse ist bevorzugt im Wesentlichen wie die Mantelseite eines Zylinders ausgebildet. Die Mehrzahl von Stegen, die mindestens im Übergangsbereich ausgebildet ist, ist bevorzugt mindestens auf der Übergangsinnenfläche ausgebildet und weiter bevorzugt mit in die Übergangsinnenfläche eingelassen. Die Steginnenseiten sind bevorzugt frei zugänglich auf der Übergangsinnenfläche und/oder der Seiteninnenfläche ausgebildet, und bilden dort eine Oberfläche aus.

In einer besonders bevorzugten Ausführungsform weist der Kopfteil der Linse die Kopfinnenfläche und eine Kopfaußenfläche auf, die sich im Wesentlichen parallel zueinander nach außen vom Seitenteil entfernend wölben. Die Kopfaußenfläche des Kopfteils ist der Kopfinnenfläche des Kopfteils abgewandt angeordnet. In einer Draufsicht auf die Leuchte ist der Kopfteil der Linse bevorzugt rund ausgebildet und grenzt randseitig an den Übergangsbereich an. Die bevorzugte parallele Wölbung der Kopfinnenfläche und der Kopfaußenfläche bildet einen Null-Meniskus. Durch den Null-Meniskus erfährt das Licht, das durch die Linse strahlt, einen parallelen Versatz und behält die Richtung, in die es strahlt, bei. Der Kopfteil weist bevorzugt weder auf der Kopfinnenfläche noch auf der Kopfaußenfläche eine Fixierungsmöglichkeit, beispielsweise durch Schrauben o.ä., auf, um die Lichtintensität eines Leuchtmittels durch störende Elemente nicht negativ zu beeinflussen. Weiter bevorzugt weist der Übergangsbereich auf der Übergangsinnenfläche und der Übergangsaußenfläche keine solche Fixierungsmöglichkeiten auf.

Bevorzugt bildet die Linse über die Innenfläche den einseitig offenen Hohlraum. Die Linse bildet bevorzugt in einem montierten Zustand gemeinsam mit einer Grundplatte ein Gehäuse für bevorzugt mindestens eine Platine und weiter bevorzugt mindestens ein Leuchtmittel. Das Gehäuse, umfassend die Linse und die Grundplatte, umschließt einen im Wesentlichen geschlossenen Hohlraum. Bevorzugt sind die Grundplatte und die Linse mit einem Schweißverfahren mit einander verbunden. Besonders bevorzugt sind die Grundplatte und die Linse mittels Ultraschallschweißen miteinander verbunden.

Soweit in der vorliegenden Erfindung der Begriff montiert, Montage oder montierter Zustand verwendet wird, ist hierunter die Montage zwischen mehreren Komponenten beziehungsweise Teilelemente zu verstehen, die als Ganzes die Leuchte bilden.

Soweit in der vorliegenden Erfindung der Begriff installiert, Installation oder installierter Zustand verwendet wird, ist hierunter die Anbringung und Verkabelung der Leuchte an einem externen Element wie beispielsweise einem Transport- und/oder Transporthilfsmittels zu verstehen.

Das Leuchtmittel ist bevorzugt mindestens eine Glühlampe, weiter bevorzugt mindestens eine Halogenlampe, und besonders bevorzugt mindestens eine lichtemittierende Diode (LED). Das Leuchtmittel ist bevorzugt auf der Platine befestigt. Verbindungstechniken, die das Leuchtmittel mit der Platine verbinden, sind bevorzugt Löten, Schweißen, Kleben oder formschlüssige Verbindungen. Besonders bevorzugt ist das Leuchtmittel mit der Platine mittels Löten über ein Lot in Form von Lotpaste oder Lotdraht verbunden.

Erfindungsgemäß umfasst die Leuchte mindestens einen Reflektoreinsatz. Der Reflektoreinsatz ist in der Draufsicht auf die Leuchte bevorzugt rund ausgebildet und weiter bevorzugt in einem Durchmesser etwas kleiner als der Durchmesser der Seiteninnenfläche des Seitenteils der Linse. Erfindungsgemäß weist der Reflektoreinsatz mindestens eine Kammer und weiter bevorzugt eine Mehrzahl von Kammern auf. Die Kammern sind bevorzugt trichterförmig ausgebildet und weisen eine große und eine kleine Kammeröffnung auf. Erfindungsgemäß sind die Kammern in den Reflektoreinsatz teilweise oder vollständig eingelassen. Die große Kammeröffnung ist bevorzugt in einer oberen Seite des Reflektoreinsatzes angeordnet, die im montierten Zustand der Kopfinnenfläche des Kopfteils der Linse gegenüberliegend angeordnet ist. Weiter bevorzugt ist die kleine Kammeröffnung in einer unteren Seite, die der oberen Seite gegenüberliegt, angeordnet. Das Verhältnis der großen Kammeröffnung zu der kleinen Kammeröffnung liegt über eine Breite vorzugsweise in einem Bereich von etwa 2 :1 bis etwa 6:1, weiter bevorzugt in einem Bereich von etwa 3:1 bis etwa 5:1 und besonders bevorzugt bei etwa 4:1.

Bevorzugt weisen die Kammern auf einer Seitenwand und besonders bevorzugt die Seitenwand vollständig abdeckend eine Mehrzahl von Reflektorfeldern auf. Die Reflektorfelder sind bevorzugt viereckig, weiter bevorzugt im Wesentlichen rechteckig und besonders bevorzugt trapezförmig ausgebildet. Die Reflektorfelder, die die Seitenwände der Kammern abdecken, sind bevorzugt eine Kombination von unterschiedlich ausgebildeten quadratischen, trapezförmigen und länglichen Reflektorfeldern. Die Fläche, die ein jedes Reflektorfeld aufweist, ist im Wesentlichen planar ausgebildet. Über eine Tiefe, die sich von der unteren Seite des Reflektoreinsatzes bis zur oberen Seite des Reflektoreinsatzes erstreckt, sind die Reflektorfelder bevorzugt von Feld zu Feld immer steiler ausgerichtet. Die obersten Reflektorfelder, die mit ihrer Fläche an die obere Seite des Reflektoreinsatzes angrenzen, weisen zu dieser einen Winkel bevorzugt in einem Bereich von etwa 75° bis etwa 90° und besonders bevorzugt in einem Bereich von etwa 80° bis etwa 85° auf. Die untersten Reflektorfelder, die im Wesentlichen angrenzend zur kleinen Kammeröffnung sind, weisen mit ihrer Fläche einen Winkel zur oberen Seite des Reflektoreinsatzes bevorzugt in einem Bereich von etwa 45° bis etwa 75° und besonders bevorzugt in einem Bereich von etwa 55° bis etwa 75° auf.

In einer besonders bevorzugten Ausführungsform bilden bevorzugt zwei bis fünf Kammern und besonders bevorzugt drei bis vier Kammern einen Kammerverbund. Der Kammerverbund weist mehrere Kammern direkt nebeneinander auf, die bevorzugt auf einer und/oder zwei Seiten der Kammern eine vertiefte Zwischenwand aufweisen. Die bevorzugt vertiefe Zwischenwand verbindet die Kammern miteinander und bildet mit diesen den Kammerverbund. Die vertieften Zwischenwände weisen bevorzugt in etwa die Hälfte einer ursprünglichen Tiefe der Kammern auf. Die Tiefe der Kammern erstreckt sich von der großen Kammeröffnung bis zur kleinen Kammeröffnung.

In einer bevorzugten Ausführungsform sind drei Kammerverbunde nebeneinander im Reflektoreinsatz angeordnet. Jeder der Kammerverbunde weist eine Längserstreckung auf, die in der Draufsicht auf die Leuchte im jeweiligen Kammerverbund über beziehungsweise durch die mindestens zwei Kammern im Kammerverbund verläuft. Der mittlere der drei Kammerverbunde erstreckt sich mit seiner Längserstreckung im Wesentlichen über einen Durchmesser des bevorzugt runden Reflektoreinsatzes. Weiter bevorzugt weist der mittlere der drei Kammerverbunde drei, vier oder mehr Kammern im Kammerverbund auf. Die beiden äußeren Kammerverbunde erstrecken sich mit ihrer Längserstreckung, bevorzugt parallel zur Längserstreckung des mittleren Kammerverbundes. Die äußeren Kammerverbunde weisen bevorzugt einen Kammerverbund aus jeweils zwei, drei oder mehr Kammern bevorzugt aber eine oder zwei Kammern weniger auf als der mittlere Kammerverbund. Die großen Kammeröffnungen der Kammern im Kammerverbund durchdringen die obere Seite des Reflektoreinsatzes bevorzugt zu etwa 98% bis etwa 70%, weiter bevorzugt zu etwa 95% bis etwa 80% und besonders bevorzugt zu etwa 90% bis zu etwa 85%. Die Kammerverbunde nehmen über die großen Öffnungen der Kammern einen großen Teil der Fläche der oberen Seite des Reflektoreinsatzes ein.

Der Reflektoreinsatz weist auf der unteren Seite mindestens zwei Aufsätze auf, die in einem montierten Zustand in jeweils eine Platinenausnehmung der Platine greifen und den Reflektoreinsatz mit dieser verbinden. Der Reflektoreinsatz weist bevorzugt auf der unteren Seite die Aufsätze auf und weiter bevorzugt, ausgenommen der kleinen Kammeröffnungen, keine Ausnehmungen. Weiter bevorzugt sind neben den Kammeröffnungen keine weiteren Öffnungen, Ausnehmungen o.ä. im Kammerbereich angeordnet, wodurch die Lichtintensität des mindestens einen Leuchtmittels weiter optimiert ist, da beispielsweise Befestigungsmittel wie Schrauben o.ä., die durch die Ausnehmungen greifen, die Intensität nicht negativ beeinflussen können. Der Reflektoreinsatz ist bevorzugt mit den Aufsätzen rotationsunterbindend auf der Platine gehalten, weiter bevorzugt ist die Platine auf der Grundplatte rotationsunterbindend gehalten. Besonders bevorzugt sind die Platine und/oder der Reflektoreinsatz mit ihren Seiten in Kontakt mit dem Gehäuse, so dass kein Spiel im Verbund vorhanden ist.

Das bevorzugt mindestens eine Leuchtmittel, das bevorzugt auf der Platine befestigt ist, greift im montierten Zustand bevorzugt durch die kleine Kammeröffnung der Kammer. Weiter bevorzugt sind mehrere Leuchtmittel auf der Platine derart angeordnet, dass diese mit der Anordnung und der Anzahl der Kammern im Reflektoreinsatz übereinstimmt und bevorzugt mindestens ein Leuchtmittel durch jeweils eine kleine Kammeröffnung greift.

In einer bevorzugten Ausführungsform, in der drei Kammerverbunde nebeneinander im Reflektoreinsatz angeordnet sind und die Summe der Kammern zehn beträgt, greifen entsprechend zehn Leuchtmittel durch die kleinen Kammeröffnungen der Kammern.

Im montierten Zustand ist der Reflektoreinsatz bevorzugt im Hohlraum des Gehäuses, das mindestens von der Linse und der Grundplatte gebildet ist, angeordnet. Bevorzugt ist der Reflektoreinsatz entsprechend im Gehäuse angeordnet, so dass die große Kammeröffnung der mindestens einen Kammer gegenüberliegend zu der Kopfinnenfläche des Kopfteils angeordnet ist.

In einer bevorzugten Ausführungsform ist eine Reflektoraußenseite des Reflektoreinsatzes gegenüberliegend und weiter bevorzugt unmittelbar anliegend an der Seiteninnenfläche des Seitenteils der Linse angeordnet. Mit der bevorzugt unmittelbar anliegenden Anordnung ist im Wesentlichen kein Spiel zwischen Reflektoreinsatz und Seitenteil der Linse vorhanden. Bevorzugt versinkt der Reflektoreinsatz vollständig im einseitig offenen Hohlraum der Linse. Bevorzugt schließt die Grundplatte an einem unteren Endbereich des Seitenteils der Linse das Gehäuse ab.

In einer weiter bevorzugten Ausführungsform liegt der Reflektoreinsatz mit seiner Reflektoraußenseite teilweise und nicht vollständig an der Seiteninnenfläche des Seitenteils an. Die Linse umschließt den Reflektoreinsatz mit seinem Hohlraum nicht vollständig und der Reflektoreinsatz ragt aus dieser über die offene Seite der Linse heraus. Das Gehäuse, bestehend aus mindestens der Linse und der Grundplatte, ist bevorzugt über eine vertiefte Grundplatte geschlossen, die den Reflektoreinsatz mit dem aus dem Linsenhohlraum herausragenden Teil umschließt.

Bevorzugt ist in Richtung einer z-Achse, die rechtwinklig durch den Mittelpunkt einer Kopfaußenfläche des Kopfteils verläuft, der Kopfteil der Linse vollständig und der Übergangsbereich der Linse mindestens teilweise höher als mindestens ein Abdeckring, der im montierten Zustand randseitig an die Linse angelegt ist, angeordnet. Die z-Achse verläuft rechtwinklig durch den Mittelpunkt der Kopfaußenfläche des Kopfteils. Der Kopfteil, der vollständig, und der Übergangsbereich, der teilweise in Richtung der z-Achse höher als mindestens der Abdeckring angeordnet sind, sind weiter bevorzugt höher als die Grundplatte angeordnet und besonders bevorzugt höher als alle weiteren Teilelemente der Leuchte angeordnet.

In einer bevorzugten Ausführungsform nehmen die Stege im Übergangsbereich in einer Dicke (d), die den Abstand von einer Spitze bzw. Maximum der Steginnenseite zu einem Tal bzw. Minimum der Stegaußenseite beschreibt, in Richtung des Kopfteils ab. Die Steginnenseite, die dem Hohlraum zugewandt ist, weist auf ihrem höchsten Punkt, der bevorzugt mittig auf der Steginnenseite ist, die Spitze der Steginnenseite auf. Die Stegaußenseite, die abgewandt zur Steginnenseite auf den Stegen angeordnet ist, weist bevorzugt mittig auf dieser das Tal der Stegaußenseite auf. Die Stege, die im Übergangsbereich angeordnet sind, erstrecken sich bevorzugt mit ihrer Längserstreckung ausgehend vom Kopfteil in Richtung des Seitenteils. Die Stege erstrecken sich mit ihrer Längserstreckung bevorzugt ausgehend von der Übergangsinnenfläche des Übergangsbereiches bis zur Seiteninnenfläche des Seitenteils. Die Stege weisen bevorzugt im Bereich der Seiteninnenfläche eine gleichbleibende Dicke (d) auf, die weiter bevorzugt im Übergangsbereich, dem Kopfteil annähernd, in der Dicke (d) abnimmt. Die Dicke (d) der Stege nimmt in Richtung des Kopfteils bevorzugt so weit ab, dass die Steginnenseite und die Stegaußenseite an einem oberen Endbereich der Stege, bevorzugt im Übergangsbereich oder im an diesen angrenzenden Bereich des Kopfteils, zusammenlaufen.

Die Stege, die mindestens im Übergangsbereich angeordnet sind, erstrecken sich weiter bevorzugt mit ihrer Längserstreckung im Wesentlichen vollständig über eine Länge (I) des Seitenteils. Besonders bevorzugt sind die Stege an einem unteren Endbereich des Seitenteils nicht ausgebildet. Die Stege, die mindestens im Übergangsbereich und bevorzugt auch im Seitenteil angeordnet sind, bilden im Bereich des Seitenteils bevorzugt im Wesentlichen einen Sichtschutz auf innenliegende Teile, wie insbesondere den Reflektoreinsatz. Die Mehrzahl von Stegen, die bevorzugt auf der Seiteninnenfläche des Seitenteils angeordnet ist und damit an den Hohlraum im Linseninneren angrenzt, bildet mit der bevorzugt unmittelbar aneinander anliegenden Anordnung eine optisch homogene Struktur.

In einer bevorzugten Ausführungsform weist der Seitenteil der Linse auf der Seiteninnenfläche mindestens einen Vorsprung beziehungsweise eine Feder einer Feder-/Nut-Verbindung auf. Die Feder der Feder-/Nut-Verbindung erstreckt sich in Richtung des Hohlraums und mit ihrer Längserstreckung bevorzugt in Richtung der Länge (I) des Seitenteils und weiter bevorzugt vollständig über die Länge (I) des Seitenteils. Bevorzugt weist der Reflektoreinsatz mindestens eine Nut auf, die als Negativform und zur Positionierung des Vorsprungs der Linse dient.

In einer weiter bevorzugten Ausführungsform weist der Seitenteil der Linse auf einer Seitenaußenfläche mindestens einen Vorsprung beziehungsweise eine Feder auf. Die Seitenaußenfläche ist die abgewandte Seite der Seiteninnenfläche und grenzt an die Übergangsaußenfläche an. Die Feder erstreckt sich vom Hohlraum entfernend und mit ihrer Längserstreckung bevorzugt in Richtung der Länge (I) des Seitenteils. Bevorzugt weist die Grundplatte eine Nut auf, die als Negativform und zur Positionierung der Feder der Linse dient.

Erfindungsgemäß umfasst der Kopfteil der Linse ein Reflektorband, das weiter bevorzugt in den Kopfteil mit eingelassen ist. Das Reflektorband verläuft erfindungsgemäß mittig über den Kopfteil. Bevorzugt ist der Kopfteil in der Draufsicht auf die Leuchte rund ausgebildet und das Reflektorband verläuft mit seiner Längserstreckung durch einen Mittelpunkt (m) des Kopfteils. Bevorzugt verläuft das Reflektorband vollständig über den Durchmesser des Kopfteils und weiter bevorzugt bis in den Übergangsbereich hinein. Der Kopfteil weist auf der Kopfaußenfläche im Bereich des Reflektorbands bevorzugt eine glatte Struktur auf. Weiter bevorzugt weist der Kopfteil auf der Kopfinnenfläche eine gewellte und besonders bevorzugt eine gezackte Struktur auf. Die wellenförmige oder gezackte Struktur erstreckt sich bevorzugt in Richtung des Hohlraumes. Das Reflektorband besteht bevorzugt teilweise aus einem lichtdurchlässigen Material und weiter bevorzugt vollständig aus einem lichtdurchlässigen Material.

In einer vorteilhaften Ausführungsform verläuft die Längserstreckung des Reflektorbands in etwa parallel zur Längserstreckung mindestens eines Kammerverbundes aus zwei bis fünf in einen Reflektoreinsatz teilweise oder vollständig eingelassenen Kammern des Reflektoreinsatzes. Besonders bevorzugt verläuft das Reflektorband in der Draufsicht auf die Leuchte parallel und mittig über einen Kammerverbund.

In einer vorteilhaften Ausführungsform weist die Leuchte eine Montageplatte auf, die eine Fixierung der Leuchte an beispielweise einer Wand eines Transport- und/oder Transporthilfsmittels ermöglicht. Die Montageplatte ist in einer Unterseitenansicht auf die Leuchte bevorzugt im Wesentlichen rund ausgebildet. In montierten Zustand umschließt die Grundplatte bevorzugt die Montageplatte randseitig und gibt weiter bevorzugt eine Seite frei, so dass die Montageplatte über diese Seite mit der Wand befestigt wird. Um die Montageplatte zu umschließen, weist die Grundplatte in einer Unterseite eine bevorzugte erste Vertiefung auf, die weiter bevorzugt rund ausgebildet ist und die Montageplatte fasst. An einem unteren Ende weist die Grundplatte randseitig eine Wandung auf, die bevorzugt als eine Wandauflage dient und die Montageplatte umschließt. Die Montageplatte versinkt bevorzugt teilweise und weiter bevorzugt vollständig in der Vertiefung der Grundplatte. Die Fixierung der Leuchte an einer Wand geschieht bevorzugt mit Klebemitteln und weiter bevorzugt mit Schrauben und/oder Nägeln, die durch mindestens eine erste Fixierungsausnehmung der Montageplatte greifen.

In einer weiter vorteilhaften Ausführungsform weist die Leuchte den Abdeckring auf. Der Abdeckring ist in einer Draufsicht auf die Leuchte bevorzugt rund ausgebildet und weist weiter bevorzugt eine runde mittige Ausnehmung auf. Die mittige Ausnehmung des Abdeckrings ist bevorzugt in etwa so groß wie der Kopfteil der Linse. Im montierten Zustand ist der Abdeckring randseitig an die Linse angelegt und liegt bevorzugt auf der Grundplatte auf. Der Abdeckring schützt die Leuchte vorzugsweise vor Verunreinigungen, die gegebenenfalls bei der Fahrt an die Leuchte gelangen können. Vorzugsweise umschließt der Abdeckring die Linse im Bereich des Übergangsbereiches, so dass der Übergangsbereich bevorzugt mit Teilbereichen, weiter bevorzugt vollständig, durch die mittige Ausnehmung des Abdeckrings aus diesem herausragt.

In einer bevorzugten Ausführungsform weist mindestens die Grundplatte, die im montierten Zustand gemeinsam mit der Linse ein Gehäuse bildet, eine Mehrzahl von Knaggen und/oder Lücken einer Bajonettbefestigung auf. Soweit in der vorliegenden Erfindung der Begriff Bajonettbefestigung verwendet wird, ist hierunter ein Steck-Dreh-Verschluss zu verstehen. Bevorzugt rastet die Bajonettbefestigung beziehungsweise der Steck-Dreh-Verschluss in einer Endstellung ein, indem die Knaggen abrupt hinter bevorzugt Rastmittel der Lücken greifen. Weiter bevorzugt verklemmen sich die Knaggen in den Lücken. Die Lücken sind bevorzugt Ausnehmungen und Hinterschneidungen in der Grundplatte und/oder der Montageplatte und sind weiter bevorzugt randseitig in diesen angeordnet. Die bevorzugten Hinterschneidungen sind an den Ausnehmungen vertieft und seitlich angeordnet. Bevorzugt rasten die Knaggen im Bereich der Hinterschneidungen hinter bevorzugten Rastmitteln ein. Weiter bevorzugt verklemmen die Knaggen im Bereich der Hinterschneidungen und besonders bevorzugt verklemmen und rasten die Knaggen im Bereich der Hinterschneidungen ein. Das Verklemmen der Knaggen in den Lücken und bevorzugt Hinterschneidung geschieht bevorzugt durch eine Wandstärkenzunahme der Knaggen. Umso tiefer die Knaggen in die Lücken und bevorzugt Hinterschneidungen in Richtung einer Endstellung geschoben werden, desto weniger Spiel ist zwischen einer Knaggenwand und einer Wandung der Hinterschneidungen. Weiter bevorzugt nimmt die Wandstärke der Wandung der Hinterschneidungen zu. Besonders bevorzugt nehmen die Wandstärke der Wandung der Hinterschneidung und die Wandstärke der Knaggen zu, um ein Verklemmen zu erreichen.

Bevorzugt weisen die Grundplatte Knaggen und die Montageplatte entsprechende Lücken einer Bajonettbefestigung auf. Weiter bevorzugt weisen die Grundplatte Lücken und der Abdeckring entsprechende Knaggen einer Bajonettbefestigung auf. Besonders bevorzugt weist die Grundplatte Knaggen für entsprechende Lücken auf der Montageplatte und die Lücken für entsprechende Knaggen am Abdeckring auf.

Die vorliegende Erfindung betrifft weiterhin ein Verfahren zur Abgabe von Licht mit einer Leuchte, wobei das Licht mindestens eines bevorzugten Leuchtmittels in einer oder mehreren in einen Reflektoreinsatz teilweise oder vollständig eingelassenen Kammern, dem Reflektorband und in einem Übergangsbereich einer Linse entsprechend umgelenkt, reflektiert und gebrochen wird, so dass das Licht in einem Grenzstrahlungswinkel um die Leuchte strahlt. Im bevorzugt montierten Zustand greift das Leuchtmittel, das bevorzugt auf einer Platine befestigt ist, durch eine kleine Kammeröffnung der Kammer. Das vom Leuchtmittel abgegebene Licht strahlt in Richtung einer großen Kammeröffnung, durch diese hindurch und bevorzugt durch einen Kopfteil der Linse. Der Kopfteil, der bevorzugt eine parallele Wölbung über eine Kopfinnenfläche und eine Kopfaußenfläche aufweist und weiter bevorzugt ein Null-Meniskus ist, bewirkt, dass das Licht beziehungsweise die Lichtstrahlen einen parallelen Versatz erfahren und die Richtung, in der sie strahlen, im Wesentlichen beibehalten wird. Weiter bevorzugt strahlt das Licht durch den Kopfteil und den Übergangsbereich der Linse. Der Übergangsbereich ist bevorzugt abgerundet ausgebildet und weist bevorzugt auf einer Übergangsaußenfläche einen Außenradius und auf einer Übergangsinnenfläche einen Innenradius auf. Bevorzugt ist die Übergangsaußenfläche auf einer äußeren Linsenschicht und die Übergangsinnenfläche auf einer inneren Linsenschicht angeordnet.

Eine Mehrzahl von Stegen, die sich mit ihrer Längserstreckung im Wesentlichen vom Seitenteil in Richtung des Kopfteils erstreckt, weist bevorzugt eine Steginnenseite und eine dieser abgewandte Stegaußenseite auf. Bevorzugt ist die Steginnenseite unmittelbar einem Hohlraum zugewandt und näher an die Kammern des Reflektoreinsatzes als die Stegaußenseite angeordnet. Bevorzugt weist die Steginnenseite und weiter bevorzugt die Stegaußenseite über deren Fläche eine wellige Form auf. Bei einer bevorzugt mehrschichtigen Ausbildung der Linse sind die Stege und somit die wellige Form auf einer inneren Linsenschicht ausgebildet. Weiter bevorzugt bilden die Stege mit der welligen Form die innere Linsenschicht. Bevorzugt weist die wellige Form der Steginnenseite einen ersten Radius (r₁) auf, der sich von einem zweiten Radius (r₂) der Stegaußenseite unterscheidet. Weiter bevorzugt ist der erste Radius (r₁) der Steginnenseite kleiner als der zweite Radius (r₂) der Stegaußenseite. Besonders bevorzugt weißt die Stegaußenseite die wellige Form im Übergangsbereich auf. Der Abstand der Steginnenseite zur Stegaußenseite ist über eine Dicke (d), die den Abstand von einer Spitze der Steginnenseite zu einem Tal der Stegaußenseite beschreibt, größer als der Abstand der Steginnenseite zur Stegaußenseite an einem Rand der Stege. Besonders bevorzugt ist jeweils jeder Steg über die Steginnen- und die Stegaußenseite eine Sammellinse.

Bevorzugt reflektieren die eine Kammer oder die mehreren Kammern des Reflektoreinsatzes das auf eine Seitenwand auftreffende Licht. Bevorzugt weisen die Seitenwände der Kammern Reflektorfelder auf. Das Licht, das auf die Reflektorfelder trifft, wird je nach Winkel der Reflektorfelder entsprechend reflektiert. Das Licht tritt bevorzugt gerade und/oder in einem Winkel aus der großen Kammeröffnung aus. Besonders vorteilhaft ist die Reflektion des Lichtes in einem Kammerverbund. Der Kammerverbund weist bevorzugt eine vertiefte Zwischenwand auf, die einen Übergang einer Kammer zu einer weiteren Kammer im Kammerverbund darstellt. Die vertiefte Zwischenwand ermöglicht einen flachen Austritt des Lichtstrahls, der bezogen auf die große Kammeröffnung den Lichtstrahl in einem spitzen Winkel aus diesem austreten lässt. Die Zwischenwand weist bevorzugt mittig, weiter bevorzugt eine mittig und symmetrisch ausgebildete Vertiefung aus. Das Minimum der Vertiefung liegt bevorzugt bei etwa der halben Höhe einer Kammer.

Erfindungsgemäß tritt das Licht in einem weiten Grenzstrahlungswinkel aus der Leuchte aus. Der Grenzstrahlungswinkel beschreibt die gesamte Strahlung des mindestens einen Leuchtmittels der Leuchte in einer Achse. Der Grenzstrahlungswinkel und ein Abschirmwinkel, der in der selben Achse wie der Grenzstrahlwinkel verfährt, bilden in Summe einen Winkel β von 90°. Der Abschirmwinkel ist der Winkel, in den keine Lichtstrahlung des Leuchtmittels gelangt. In einer besonders bevorzugten Ausführungsform ist der Abschirmwinkel negativ, so dass der Grenzstrahlungswinkel über 90° hinaus geht.

In einer bevorzugten Ausführungsform weist der Kopfteil der Linse ein Reflektorband auf, das bevorzugt über den Kopfteil und weiter bevorzugt durch den Kopfteil verläuft. Das Reflektorband weist bevorzugt im Bereich der Kopfinnenfläche eine gewellte und besonders bevorzugt eine gezackte Struktur auf. Das Licht, das auf den Kopfteil der Linse trifft, durchläuft diesen lediglich mit einem bevorzugten parallelen Versatz. In dem Bereich, indem das Reflektorband angeordnet ist, wird das Licht an der bevorzugt gewellten und besonders bevorzugt gezackten Struktur gebrochen und umgelenkt. Die Brechung lässt das Licht bevorzugt in Richtung des Abschirmwinkels strahlen und verdrängt diesen.

Die Lichtbrechung bevorzugt am Übergangsbereich der Linse und die Lichtreflektion in den Kammern und/oder dem Kammerverbund und besonders bevorzugt die Kombination aus Brechung und Reflektion ermöglicht einen weiten Grenzstrahlungswinkel.

In einer besonders vorteilhaften Ausführungsform, weist die Leuchte keine Fixierungs- bzw. Befestigungsmittel wie Schrauben, Muttern o.Ä. im Bereich der Kammern und Linse auf, wodurch das Licht in seiner Intensität nicht negativ beeinflusst ist.

Bevorzugt ist eine Stromquelle der Leuchte auf dem Transport- und/oder Transporthilfsmittel mitgeführt. Weiter bevorzugt ist die Leuchte über eine Auto- beziehungsweise Lastkraftwagenbatterie mit Strom versorgt.

Die vorliegende Erfindung betrifft auch eine Linse mindestens aufweisend einen Kopfteil, einen Übergangsbereich und ein Seitenteil, wobei die Linse mindestens im Übergangsbereich, der den Kopfteil mit dem Seitenteil der Linse verbindet, eine Mehrzahl von Stegen umfasst, die sich mit ihrer Längserstreckung im Wesentlichen vom Seitenteil in Richtung des Kopfteils erstrecken, wobei die Stege eine Steginnenseite und eine Stegaußenseite umfassen, die gegenüberliegend angeordnet sind, wobei die Steginnenseite konvex und die Stegaußenseite konkav ausgebildet ist, wobei der Kopfteil der Linse ein Reflektorband umfasst, das mittig über dem Kopfteil verläuft, zur Verwendung in einer Leuchte wie vorstehend beschrieben.

Weitere vorteilhafte Ausgestaltungen gehen aus den nachfolgenden Zeichnungen hervor. Gleiche Teile oder Teile mit gleicher Funktion können die gleichen Bezugszeichen aufweisen. Es zeigen:
- Fig. 1: eine erste perspektivische Ansicht einer ersten Ausführungsform einer Leuchte;
- Fig. 2: die Leuchte aus Fig. 1 in einer Detailansicht auf eine Linse;
- Fig. 3: die Leuchte aus Fig. 1 in einer Draufsicht;
- Fig. 4: die Leuchte aus Fig. 1 in einer zweiten perspektivischen Ansicht;
- Fig. 5: die Leuchte aus Fig. 1 in einer Unteransicht;
- Fig. 6: die Leuchte aus Fig. 1 in einer Seitenansicht;
- Fig. 7: die Leuchte aus Fig. 1 in einer perspektivischen Schnittansicht;
- Fig. 8: die Leuchte aus Fig. 1 in einer Seitenexplosionsansicht;
- Fig. 9: eine erste perspektivische Ansicht einer zweiten Ausführungsform einer Leuchte;
- Fig. 10: die Leuchte aus Fig. 9 in einer Draufsicht;
- Fig. 11: die Leuchte aus Fig. 9 in einer zweiten perspektivischen Ansicht;
- Fig. 12: die Leuchte aus Fig. 9 in einer Unteransicht;
- Fig. 13: die Leuchte aus Fig. 9 in einer Seitenansicht;
- Fig. 14: die Leuchte aus Fig. 9 in einer Schnittansicht; und
- Fig. 15: die Leuchte aus Fig. 9 in einer Seitenexplosionsansicht.

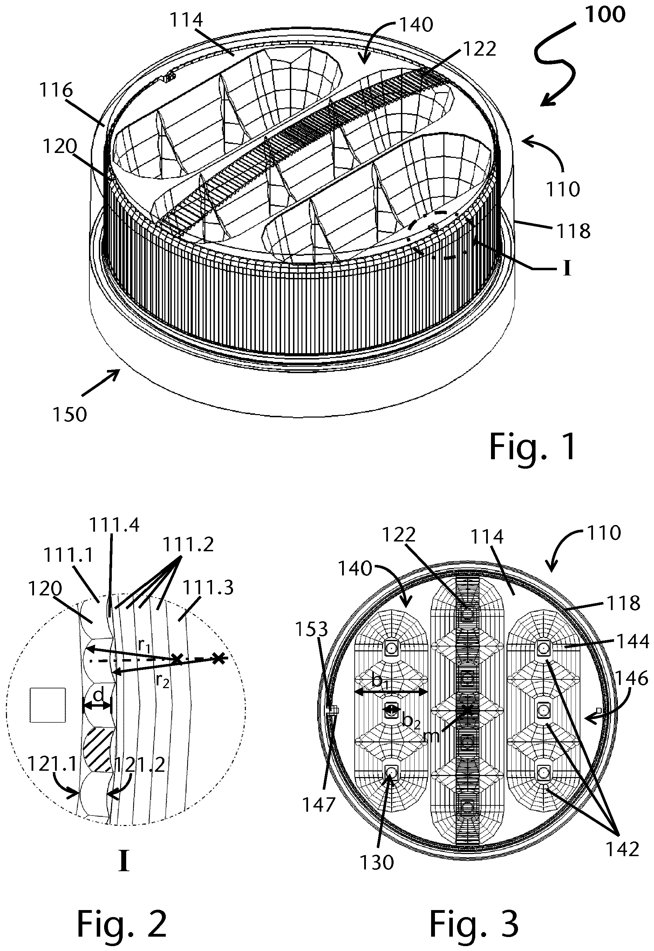

Fig. 1 zeigt eine erste perspektivische Ansicht einer ersten Ausführungsform einer Leuchte 100 umfassend eine Linse 110, einen Reflektoreinsatz 140 und eine Grundplatte 150. Die Linse 110 und die Grundplatte 150 bilden zusammen ein Gehäuse, in das der Reflektoreinsatz 140 eingesetzt ist. Die Linse 110 weist einen Kopfteil 114, einen Übergangsbereich 116 und einen Seitenteil 118 auf. Der Seitenteil 118 ist als Mantelseite eines Zylinders ausgebildet und ist über den Übergangsbereich 116 mit dem Kopfteil 114 verbunden. Der Kopfteil 114, der Übergangsbereich 116 und der Seitenteil 118 der Linse 110 umschließen einen einseitig offenen Hohlraum, bilden ein einseitig offenes Gehäuse und umschließen den Reflektoreinsatz 140 nahezu vollständig. Mit einem unteren Ende des Seitenteils 118 ist die Grundplatte 150 mit der Linse 110 verbunden und schließt das Gehäuse im Wesentlichen vollständig ab. Der Reflektoreinsatz 140 liegt auf der Grundplatte 150 auf und ist seitlich vom Seitenteil 116 und oberhalb vom Kopfteil 114 umschlossen. Im Übergangsbereich 116 beginnend und im Seitenteil 118 entlang verlaufend ist eine Mehrzahl von Stegen 120 ausgebildet. Die Stege 120 verlaufen im Wesentlichen bis zu einem unteren Endbereich des Seitenteils 118. Die Linse 110 weist ein in den Kopfteil 114 eingelassenes Reflektorband 122 auf, das mit seiner Längserstreckung über den Durchmesser des Kopfteils 114 verläuft. Das Reflektorband 122 verläuft mit seinen zwei Endbereichen bis in den Übergangsbereich 116 und endet an den Stegen 120.

Fig. 2 zeigt die Leuchte 100 gemäß Fig. 1 in einer Detailansicht auf die Linse 110. Fig. 2 veranschaulicht die Stege 120 der Linse 110 in einer Draufsicht. Die Stege 120 beginnen mit einem oberen Endbereich im Übergangsbereich 116 (siehe Fig. 1). Die Mehrzahl von Stegen 120 liegt unmittelbar aneinander an. Die Stege 120 weisen eine Steginnenseite 121.1 und eine dieser abgewandten Stegaußenseite 121.2 auf. Die Steginnenseite 121.1 und die Stegaußenseite 121.2 sind wellenförmig ausgebildet. Über eine Dicke d, die den Abstand von einer Spitze der Steginnenseite 121.1 zu einem Tal der Stegaußenseite 121.2 beschreibt, sind die Steginnenseite 121.1 und die Stegaußenseite 121.2 maximal voneinander beabstandet. Die wellenförmige Steginnenseite 121.1 weist einen ersten Radius r₁ und die Stegaußenseite 121.2 einen zweiten Radius r₂ auf. Den Radien zu entnehmen ist, dass der erste Radius r₁ kleiner als der zweite Radius r₂ ist, wodurch der Abstand der Steginnenseite 121.1 zur Stegaußenseite 121.2 im Bereich der Dicke d von Spitze zu Tal maximal ist.

Des Weiteren ist in Fig.2 eine Mehrschichtigkeit der Linse 110 verdeutlicht. Die Linse 110 umfasst eine innere Linsenschicht 111.1, eine Mehrzahl von mittleren Linsenschichten 111.2 und eine äußere Linsenschicht 111.3. Die innere Linsenschicht 111.1 grenzt an den offenen Hohlraum im Linseninneren an. Die innere Linsenschicht 111.1 ist durch die Stege 120 gebildet. Die Mehrzahl von mittleren Linsenschichten 111.2 ist seitlich von der äußeren Linsenschicht 111.3 und der inneren Linsenschicht 111.1 umschlossen. Zwischen einer der mittleren Linsenschichten 111.2, die an die innere Linsenschicht 111.1 und somit an die Stege angrenzt, ist ein Zwischenraum 111.4 angeordnet. Der Zwischenraum 111.4 ist im Wesentlichen durch die wellige beziehungsweise konkave Stegaußenseite 121.2 gebildet. Die äußere Linsenschicht 111.3 ist eine dem Hohlraum abgewandte Schicht der Linse 110.

Fig. 3 zeigt die Leuchte 100 gemäß Fig. 1 in der Draufsicht umfassend die Linse 110 und den Reflektoreinsatz 140, der zwischen den Seitenteilen 118 der Linse 110 angeordnet ist. Der Reflektoreinsatz 140 umfasst zehn Kammern 142, die jeweils eine große Kammeröffnung b₁ und jeweils eine kleine Kammeröffnung b₂ aufweisen. Die kleinen Kammeröffnungen b₂ sind im Wesentlichen mittig in den Kammern 142 in einer unteren Seite des Reflektoreinsatzes 140 angeordnet. Der Reflektoreinsatz 140 umfasst drei Kammerverbunde 146, die zweimal aus drei Kammern 142 und einmal aus vier Kammern 142 bestehen. Die Kammerverbunde 146 sind mit ihrer Längserstreckung parallel zu einander angeordnet. Die Längserstreckung der jeweiligen Kammerverbunde 146 verläuft über die Kammern 142, die im Kammerverbund 146 nebeneinander angeordnet sind. Der mittlere der drei Kammverbunde 146 weist die vier Kammern 142 auf und die beiden daneben angeordneten Kammerverbunde 146 weisen jeweils drei Kammern 142 auf. Über Seitenwände der Kammern 142 verlaufen diese vollständig abdeckend eine Mehrzahl von Reflektorfeldern 144, die im Wesentlichen viereckig ausgebildet sind. Zwischen den kleinen Kammeröffnungen b₂ ist jeweils ein Leuchtmittel 130 angeordnet. Die drei Kammerverbunde 146 grenzen mit ihren Längserstreckungsendbereichen im Wesentlichen an einem Rand des Reflektoreinsatzes 140 an. Um eine rotatorische Bewegung des Reflektoreinsatzes 140 und der Linse 110 zu unterbinden weist der Reflektoreinsatz 140 eine Nut 147 auf. In die Nut 147 eingesetzt weist die Linse 110 einen ersten Vorsprung 153 beziehungsweise eine Feder einer Feder-/Nut-Verbindung auf. Im Kopfteil 114 der Linse 110 verlaufend ist das Reflektorband 122 angeordnet. Das Reflektorband 122 verläuft mit seiner Längserstreckung über der Längserstreckung des aus vier Kammern 142 bestehenden Kammerverbundes 146 und durch einen Mittelpunkt m des Kopfteils 114.

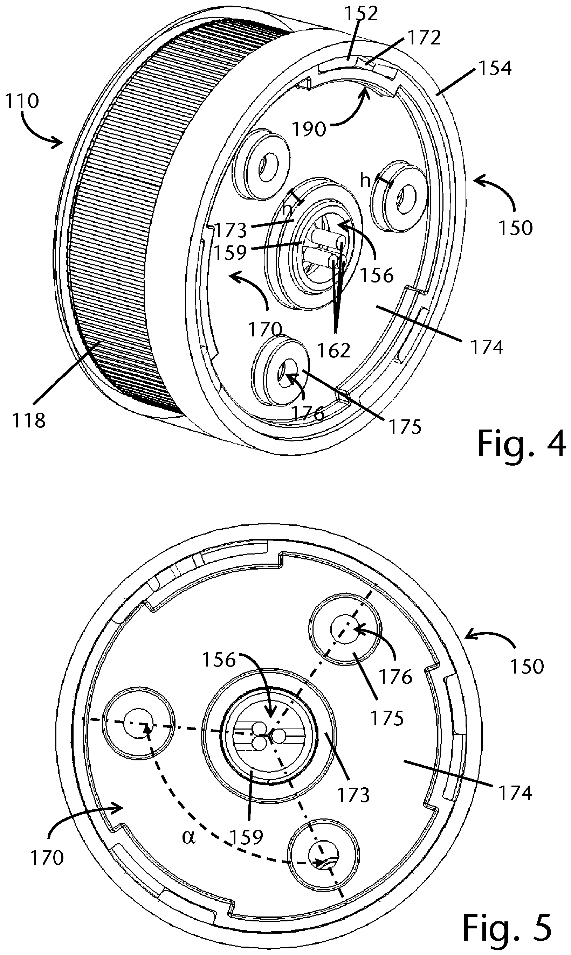

Fig. 4 zeigt die Leuchte 100 gemäß Fig. 1 in einer zweiten perspektivischen Ansicht auf die Grundplatte 150, eine Montageplatte 170 und die Linse 110. Die Linse 110 und die Grundplatte 150 bilden zusammen das Gehäuse. Die Grundplatte 150 weist seitlich eine im Wesentlichen bündige Verlängerung des Seitenteils 118 der Linse 110 auf. An einem unteren Ende weist die Grundplatte 150 randseitig eine Wandlauflage 154 auf. Die Wandauflage 154 ist eine Fläche der Leuchte 100, die bevorzugt in Kontakt mit einer Wand steht, an der die Leuchte 100 angebracht wird. Die Wandauflage 154 der Grundplatte 150 ist abgewandt vom Kopfteil 112, Fig. 4 nicht zu entnehmen, der Linse 110 an der Leuchte 100 angeordnet und ist die am weitesten vom Kopfteil 112 entfernte Fläche. Die Wandlauflage 154 der Grundplatte 150 ist eine flache und schmale Fläche, die ringartig und randseitig auf der Grundplatte 154 entlang verläuft. Zwischen der Wandauflage 154 weist die Grundplatte 150 eine erste Vertiefung auf. Die erste Vertiefung ist ausgehend von der Wandauflage 154 in Richtung der Linse 110 ausgebildet. In die erste Vertiefung der Grundplatte 150 ist die Montageplatte 170 eingesetzt. Die Montageplatte 170 ist randseitig über eine erste Bajonettbefestigung 190 mit der Grundplatte 150 verbunden. Die erste Bajonettbefestigung 190 besteht aus ersten Knaggen 152 und ersten Lücken 172. Die ersten Knaggen 152 sind in der ersten Vertiefung der Grundplatte 150 randseitig auf der Grundplatte 150 angeordnet und die ersten Lücken 172 sind randseitig in der Montageplatte 170 angeordnet. Die erste Bajonettbefestigung 190 besteht aus drei ersten Knaggen 152 und drei ersten Lücken 172. Jeweils eine erste Knagge 152 und jeweils eine erste Lücke 172 bilden eins von drei Paaren. Die Paare sind auf der Grundplatte 150 und der Montageplatte 170 im Wesentlichen gleichmäßig zu einander verteilt. Die ersten Lücken 172 sind Ausnehmungen und Hinterschneidungen in der Montageplatte 170. Die Hinterschneidungen sind an den Ausnehmungen vertieft und seitlich angeordnet. Die ersten Knaggen 152 der Grundplatte 150 verklemmen sich im Bereich der Hinterschneidungen. Das Verklemmen der ersten Knaggen 152 in den Hinterschneidungen geschieht durch eine Wandstärkenzunahme der ersten Knaggen 152. Umso tiefer die ersten Knaggen in die Hinterschneidungen in Richtung einer Endstellung geschoben werden, desto weniger Spiel ist zwischen einer Knaggenwand und einer Wandung der Hinterschneidung. Ebenfalls wie die Knaggenwand nimmt die Wandstärke der Wandung der Hinterschneidung zu, um ein Verklemmen zu erreichen.

Ebenfalls wie die Grundplatte 150, die die erste Vertiefung aufweist, weist die Montageplatte 170 eine zweite Vertiefung 174 auf, die sich in Richtung der Linse 110 erstreckt. Auf einem Grund der zweiten Vertiefung 174 sind drei Montageaufsätze 175 angeordnet. Die Montageaufsätze 175 sind zueinander in einem Winkel α von 3x120°, siehe Fig. 5, ausgerichtet. Die Montageaufsätze 175 sind rund ausgebildet und erstrecken sich in der zweiten Vertiefung 174 ausgehend vom Grund über eine Höhe h. Mittig auf den runden Montageaufsätzen 175 sind ebenfalls rund ausgebildet erste Fixierungsausnehmungen 176 angeordnet. Die ersten Fixierungsausnehmungen 176 durchdringen die Montageplatte 170 vollständig und weisen in einer gegenüberliegenden Montageplattenseite jeweils ein Senkloch, Fig. 4 nicht zu entnehmen, auf. Mittig auf dem Grund der zweiten Vertiefung 174 erstreckt sich ringartig ausgebildet eine zweite Austrittswand 173. Die zweite Austrittswand 173 erstreckt sich ebenfalls wie die Montageaufsätze 175 ausgehend vom Grund über die Höhe h. Zwischen der ringartigen zweiten Austrittswand 175 erstreckt sich ebenfalls ringartig eine erste Austrittswand 159 der Grundplatte 150. Die Grundplatte 150 durchdringt mittig mit der ersten Austrittswand 159 die Montageplatte 170 zwischen der zweiten Austrittswand 174. Zwischen der ersten Austrittswand 159 ist eine Kabelaussparung 156 ausgebildet, aus der Stromkabel 162 einer Platine 160, Fig. 4 nicht zu entnehmen, austreten.

Fig. 5 zeigt die Leuchte 100 gemäß Fig. 1 in einer Unteransicht auf die Grundplatte 150 und die Montageplatte 170. Die Montageplatte 170 ist in der ersten Vertiefung der Grundplatte 150 angeordnet und weist die zweite Vertiefung 174 auf. In einem Winkel α von 3x120° sind die drei Montageaufsätze 175 mit den jeweiligen ersten Fixierungsausnehmungen 176 zu einander angeordnet. Mittig auf dem Grund der zweiten Vertiefung 174 ist die zweite Austrittswand 173 angeordnet. Zwischen der zweiten Austrittswand 173 durchdringt die erste Austrittswand 159 der Grundplatte 150 die Montageplatte 170 und weist mittig die Kabelaussparung 156 auf.

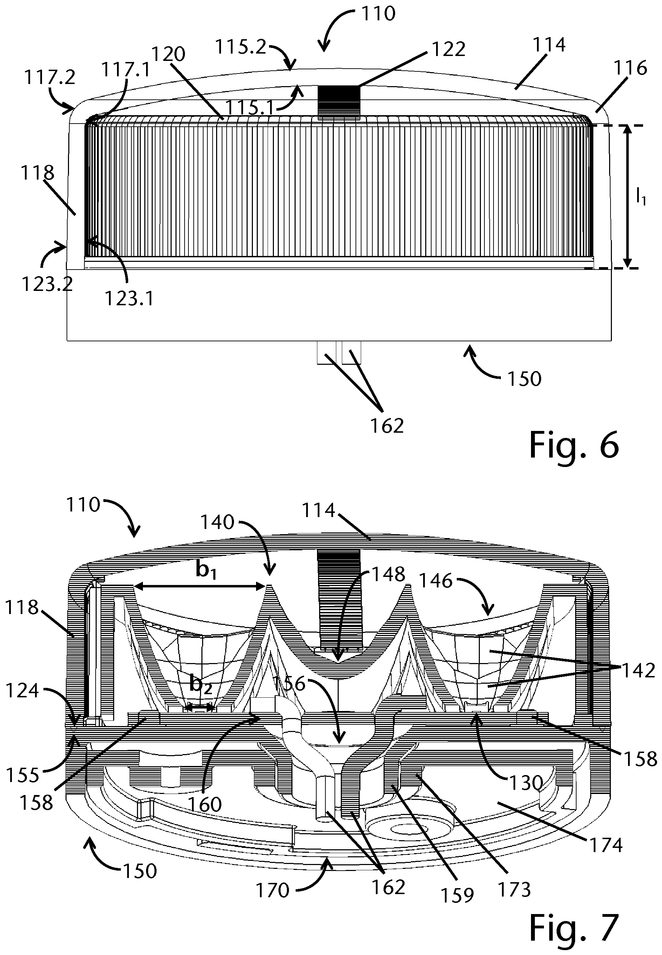

Fig. 6 zeigt die Leuchte 100 gemäß Fig. 1 in einer Seitenansicht auf die Linse 110 und die Grundplatte 150. Die Linse 110 und die Grundplatte 150 bilden das Gehäuse der Leuchte 100 und sind aufeinander, mit dem Seitenteil 118 der Linse 110 verbindend, angeordnet. Unterhalb der Grundplatte 150 sind zwei Stromkabel 162 angeordnet, die durch die Grundplatte 150 greifen und mit der Platine 160, Fig. 6 nicht zu entnehmen, verbunden sind. Die Linse 110 weist den Kopfteil 114, den Übergangsbereich 116 und den Seitenteil 118 auf. Der Kopfteil 114 weist eine Kopfinnenfläche 115.1 und eine Kopfaußenfläche 115.2 auf, die sich im Wesentlichen parallel nach außen vom Seitenteil 116 entfernend wölben. Die Kopfinnenfläche 115.1 grenzt im Gehäuse an einen Hohlraum an und die Kopfaußenfläche 115.2 ist auf der Linse 110 die abgewandte Seite der Kopfinnenfläche 115.1. Der Übergangsbereich 116 weist eine Übergangsinnenfläche 117.1 und eine Übergangsaußenfläche 117.2 auf. Die Übergangsinnenfläche 117.1 grenzt im Gehäuse an die Kopfinnenfläche 115.1 und den Hohlraum an. Die Übergangsaußenfläche 117.2 ist die abgewandte Seite der Übergangsinnenfläche 117.1 und grenzt an die Kopfaußenfläche 115.2 an. Der Seitenteil 118 weist eine Seiteninnenfläche 123.1 und eine Seitenaußenfläche 123.2 auf. Die Seiteninnenfläche 123.1 grenzt im Gehäuse an die Übergangsinnenfläche 117.1 an. Die Seitenaußenfläche 123.2 ist die abgewandte Seite der Seiteninnenfläche 123.1 und grenzt an die Übergangsaußenfläche 117.2 an. Auf einer Innenfläche der Linse 110, bestehend aus Kopfinnenfläche 115.1, Übergangsinnenfläche 117.1 und Seiteninnenfläche 123.1, ist das Reflektorband 122 angeordnet. Das Reflektorband 122 beginnt mit einem Endbereich im Übergangsbereich 116 und erstreckt sich mit seiner Längserstreckung über den Kopfteil 114 der Linse 110. Über eine Länge l₁ erstreckt sich der Seitenteil 118 der Linse, auf dessen Seiteninnenfläche 123.1 die Mehrzahl von Stege 120 angeordnet ist. Die Stege 120 erstrecken sich über fast die gesamte Länge l₁ und über die Übergangsinnenfläche 117.1 des Übergangsbereiches 116.

Fig. 7 zeigt die Leuchte 100 gemäß Fig. 1 in einer perspektivischen Schnittansicht der Linse 110, des Reflektoreinsatzes 140, der Platine 160, zweier Leuchtmittel 130, der Grundplatte 150 und der Montagplatte 170. Die perspektivische Schnittansicht ist leicht nach oben geneigt, so dass die zweite Vertiefung 174 der Montageplatte 170 sichtbar ist. Der Reflektoreinsatz 140 weist die Kammern 142 auf, die in den drei Kammerverbunden 146 angeordnet sind. Die jeweils mittleren Kammern 142 der beiden äußeren Kammerverbunde 146 sind mittig geschnitten und die Leuchtmittel 130, die auf der Platine 160 befestigt sind, sind zwischen den kleinen Kammeröffnungen b₂ angeordnet. Die Leichtmittel 130 greifen durch die kleinen Kammeröffnungen b₂. Den kleinen Kammeröffnung b₂ gegenüberliegend weisen die Kammern 142 auf einer oberen Seite des Reflektoreinsatzes 140 die großen Kammeröffnungen b₁ auf. Der mittlere Kammerverbund 146 weist eine vertiefte Zwischenwand 148 auf, die die Kammern 142 im Kammerverbund 146 voneinander trennen. Mittig zwischen der Grundplatte 150 und der Montageplatte 170 treten die Stromkabel 162 der Platine 160 aus der Kabelaussparung 156 aus. Die Kabelaussparung 156 ist zwischen der zweiten Austrittswand 173 der Montageplatte 170 und der ersten Austrittswand 159 der Grundplatte 150 angeordnet. Die Schnittansicht veranschaulicht an einem unteren Endbereich der Seitenteile 118 der Linse 110 einen Zapfen 124, der spitz zusammen läuft. Die Spitze des Zapfens 124 erstreckt sich in Richtung der Grundplatte 150. Die Grundplatte 150 weist eine entsprechende Fuge 155 beziehungsweise spitze Negativform für den Zapfen 124 auf. Auf der Grundplatte 150 angeordnet erstrecken sich zwei Positionierer 158 in Richtung des Kopfteils 114 der Linse 110. Die Positionierer 158 sind zylindrisch ausgebildet und greifen durch jeweils eine Ausnehmung in der Platine 160. Die Positionierer 158 fixieren die Platine 160 in einer rotatorischen Achse auf der Grundplatte 150.

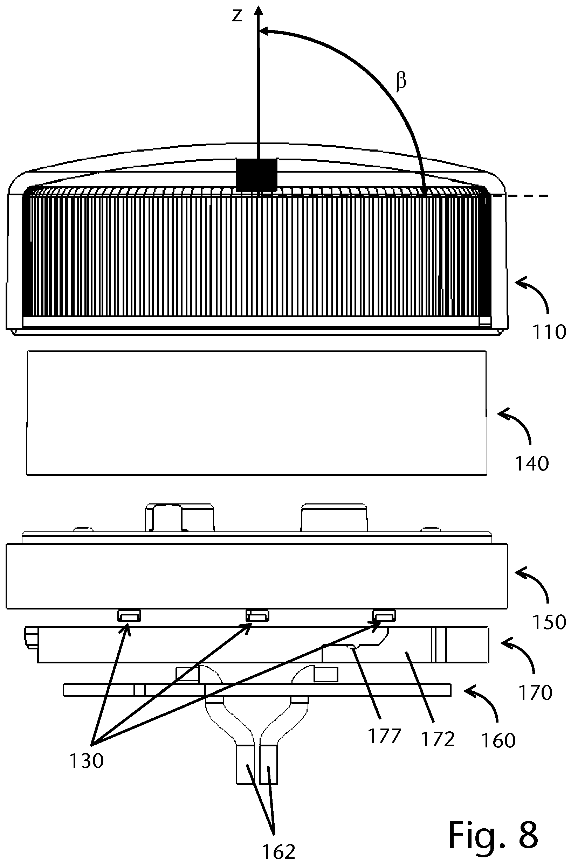

Fig. 8 zeigt die Leuchte 100 gemäß Fig. 1 in einer Seitenexplosionsansicht. Die Seitenexplosionsansicht ist eine Ansicht der Leuchte 100 in einem demontierten Zustand. Gezeigt sind die Linse 110 und der Reflektoreinsatz 140, wobei die Linse 110 etwas breiter als der Reflektoreinsatz 140 ist, um diesen im Hohlraum der Linse 110 zu fassen. Die Grundplatte 150 ist ebenfalls etwas breiter als der Reflektoreinsatz 140 und ist im montierten Zustand eine Auflage für die Linse 110 und den Reflektoreinsatz 140. Oberhalb der Linse 110 und abgehend von einer z-Achse ist ein Winkel β aufgeführt, der aus einem Grenzstrahlungswinkel und einem Abschirmwinkel besteht und in Summe 90° ergibt. Des Weiteren sind drei Leuchtmittel 130 aufgeführt, die fluchtend sieben weitere Leuchtmittel 130 verdecken. Die Montageplatte 170 weist die ersten Lücken 172 der ersten Bajonettbefestigung 190 mit Ausnehmung und Hinterschneidung auf. Im Bereich der Hinterschneidung ist ein Rastmittel 177 angeordnet, das die erste Knagge 152, Fig. 8 nicht zu entnehmen, in der Hinterschneidung im montierten Zustand einrasten lässt. Des Weiteren ist die Platine 160 aufgeführt, an der die Stromkabel 162 angeordnet sind. Die Stromkabel 162 greifen durch die Grundplatte 150 und die Montageplatte 160.

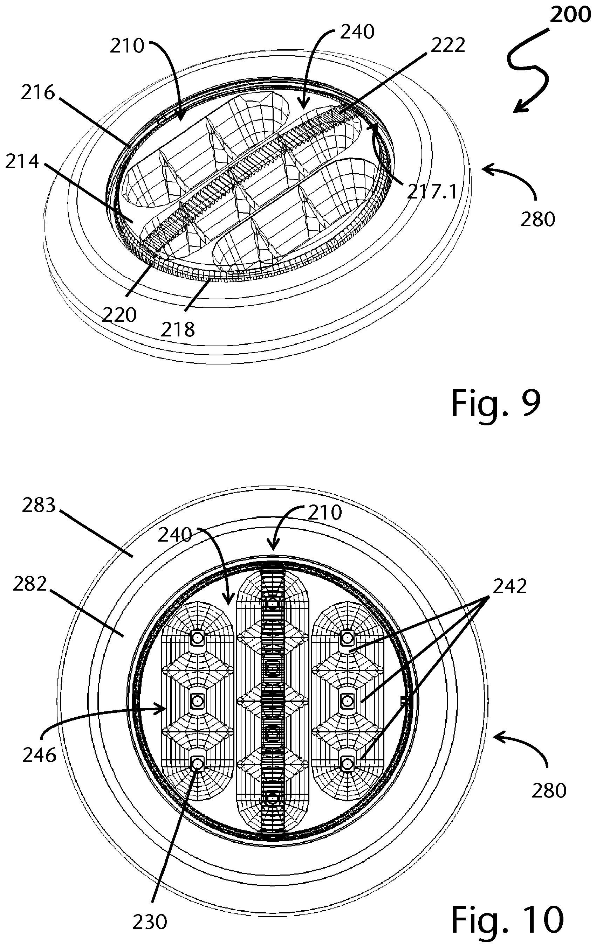

Fig. 9 zeigt eine erste perspektivische Ansicht einer zweiten Ausführungsform einer Leuchte 200 umfassend eine Linse 210, einen Reflektoreinsatz 240 und einen Abdeckring 280. Die Linse 210, umfassend einen Kopfteil 214, einen Übergangsbereich 216 und einen Seitenteil 218, wird randseitig im Bereich des Übergangsbereiches 216 vom Abdeckring 280 umschlossen. Am Übergangsbereich 216 und dem Seitenteil 218 ist eine Mehrzahl von Stegen 220 angeordnet. Die Stege 220 erstrecken sich mit ihrer Längserstreckung ausgehend vom Seitenteil 218 in Richtung des Übergangsbereiches 216. Die Mehrzahl von Stegen 220 ist unmittelbar nebeneinander angeordnet. Der Kopfteil 214 weist mittig durch diesen verlaufend ein Reflektorband 222 auf. Das Reflektorband 222 erstreckt sich mit seiner Längserstreckung von einer Seite des Übergangsbereiches 216, den Kopfteil 214 entlang, bis zur gegenüberliegenden Seite des Übergangsbereiches 216 und endet angrenzend an den Stegen 220.

Fig. 10 zeigt die Leuchte 200 gemäß Fig. 9 in einer Draufsicht auf die Linse 210, den Reflektoreinsatz 240, zehn Leuchtmittel 230 und den Abdeckring 280. Der Abdeckring 280 ist zweistufig ausgebildet und weist einen Innenring 282 und einen Außenring 283 auf. Der Innenring 282 ist im Vergleich zum Außenring 283 erhöht ausgebildet und ist der Ring des Abdeckrings 280, der die Linse 210 am Übergangsbereich 214 randseitig umschließt. Der Reflektoreinsatz 240 weist jeweils zehn Kammern 242, die in drei Kammerverbunden 246 angeordnet sind, auf. Mittig in jeder Kammer 242 sind die Leuchtmittel 230 angeordnet.

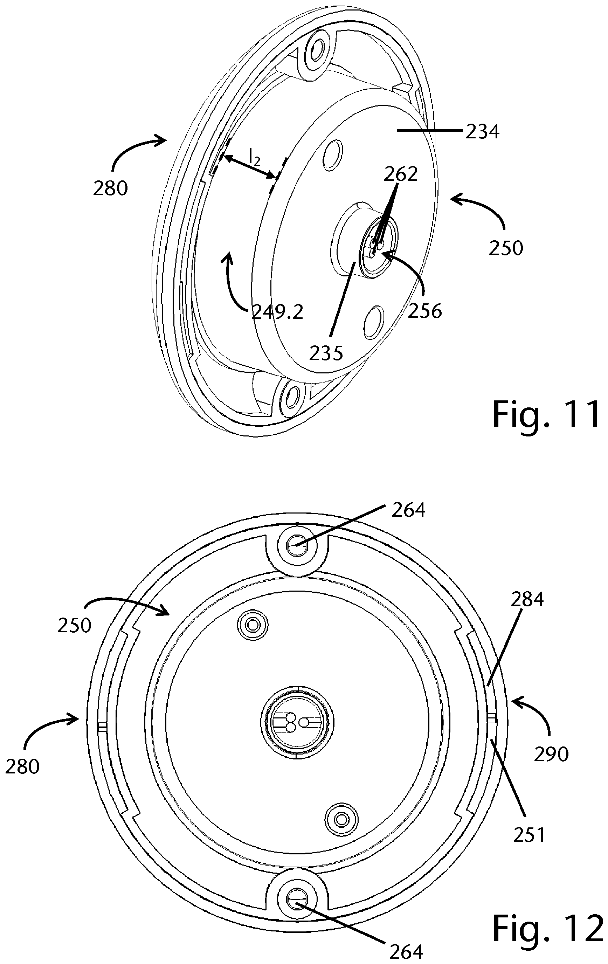

Fig. 11 zeigt die Leuchte 200 gemäß Fig. 9 in einer zweiten perspektivischen Ansicht auf die Grundplatte 250 und den Abdeckring 280. Der Reflektoreinsatz 140 ist gemäß der Leuchte 100 der ersten Ausführungsform vollständig im Hohlraum zwischen der Linse 110 eingelassen. Die zweite Ausführungsform gemäß Fig. 9 weist ein verkürztes Seitenteil 218, Fig. 11 nicht zu entnehmen, auf. Die Grundplatte 250 weist eine erste Außenseite 249.2 auf, die eine Mantelseite bildet und sich bis zu einer Grundseite 234 der Grundplatte 250 erstreckt. Die erste Außenseite 249.2 erstreckt sich über eine Länge l₂, die in etwa rechtwinklig zur Grundseite 234 verläuft. Die Grundplatte 250, die über die erste Außenseite 249.2 die Länge l₂ aufweist, fasst im Inneren nahezu vollständig den Reflektoreinsatz 240, Fig. 9 nicht zu entnehmen. Die Grundseite 234 kann im installierten Zustand als Anlagefläche der Leuchte 200 an bevorzugt einer Wand bzw. einer Ausnehmung in einer Wand dienen. Mittig auf der Bodenplatte 250 ist auf dieser ein Aufsatz 235 angeordnet, der ein mittiges Loch beziehungsweise eine Kabelaussparung 256 aufweist. Die Kabelaussparung 256 durchdringt die Grundplatte 250 im Bereich der Grundseite 234 bis zu einer Platine 260, Fig. 11 nicht zu entnehmen. An der Platine 260 sind Stromkabel 262 angeordnet, die durch die Kabelaussparung 256 der Grundplatte 250 greifen.

Fig. 12 zeigt die Leuchte 200 gemäß Fig. 9 in einer Unteransicht auf die Grundplatte 250 und den Abdeckring 280. Der Abdeckring 280 der randseitig die Linse 210, Fig. 12 nicht zu entnehmen, umschließt, ist über eine zweite Bajonettbefestigung 290 mit der Grundplatte 250 verbunden. Der Abdeckring 280 weist randseitig auf einer Innenseite zwei zweite Knaggen 284 auf, die sich in Richtung der Grundplatte 250 erstrecken. Die zweiten Knaggen 284 sind am Rand des Abdeckrings 280 und sich gegenüberliegend angeordnet. Zu jeweils einer zweiten Knagge 284 ist in der Grundplatte 250 eine zweite Lücke 251 angeordnet. Die zweiten Lücken 252 sind Ausnehmungen und Hinterschneidungen, in die die zweiten Knaggen 284 bei der Montage eingreifen. Mit einer rotatorischen Bewegung des Abdeckrings 280 greifen die zweiten Knaggen 284 in die Hinterschneidungen der zweiten Lücken 251. Die Grundplatte 250 weist im Wesentlichen randseitig um 90° versetzt zu den zweiten Lücken 251 zwei zweite Fixierungsausnehmungen 264 auf. Die Fixierungsausnehmungen 264 durchdringen vollständig die Grundplatte 250. Der Abdeckring 280 verdeckt auf der gegenüberliegenden Seite der Fixierungsausnehmungen 264 diese, Fig. 12 nicht zu entnehmen. Durch die Fixierungsausnehmungen 264 können bevorzugt Schrauben und/oder Nägel greifen, die die Leuchte 200 mit beispielsweise einer Wand befestigen.

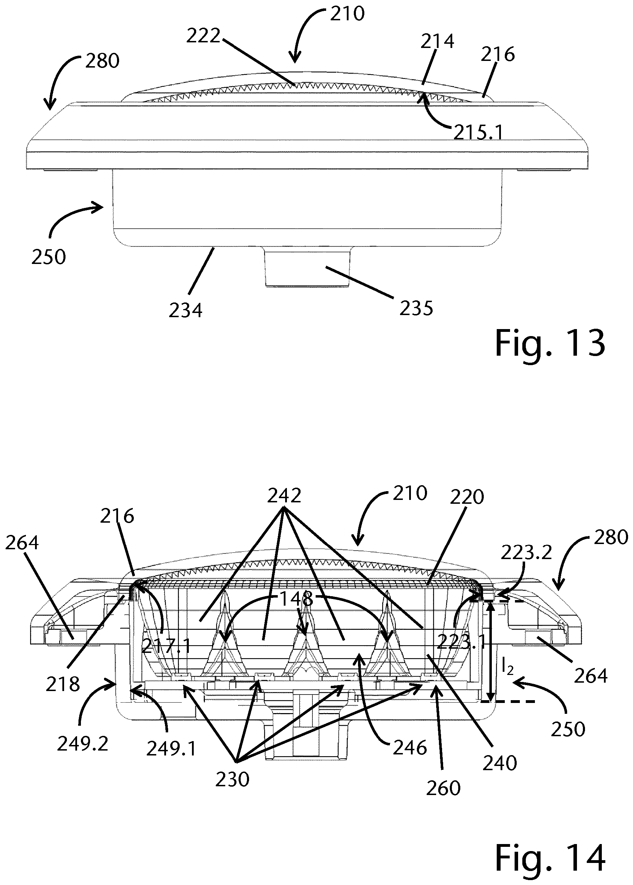

Fig. 13 zeigt die Leuchte 200 gemäß Fig. 9 in einer Seitenansicht auf die Linse 210, den Abdeckring 280 und die Grundplatte 250. Die Grundplatte 250 weist auf der Grundseite 234 den Aufsatz 235 auf. Um die Grundseite 234 bei der Installation der Leuchte 200 an beispielsweise einer Wand anliegen zu lassen, muss der Aufsatz 235 in der Wand versenkt werden. Die Grundseite 234 kann zusammen mit dem Aufsatz 235 in der Wand versenkt werden, so dass der Abdeckring 280 mit Teilen der Grundplatten 250 an der Wand anliegt. Der Abdeckring 280, der randseitig die Linse 210 am Übergangsbereich 216 umschließt, ist entsprechend auf der Grundplatte 250 angeordnet, so dass der Übergangsbereich 216 zu einem Großteil zwischen dem Abdeckring 280 herausragt. Die Linse 210 weist auf einer Kopfinnenfläche 215.1 des Kopfteils 214 das Reflektorband 222 auf. Das Reflektorband 222 erstreckt sich ausgehend vom Übergangsbereich 216, am Kopfteil 214 entlang, bis zum gegenüberliegenden Teil des Übergangsbereiches 216. Das Reflektorband 222 weist eine Mehrzahl von Zacken unmittelbar aneinander liegend auf. Jeder einzelne Zacken erstreckt sich mit seiner Längserstreckung rechtwinklig zur Längserstreckung des Reflektorbands 222 in Richtung des Hohlraums.

Fig. 14 zeigt die Leuchte 200 gemäß Fig. 9 in einer Schnittansicht der Linse 210, des Abdeckrings 280, der Grundplatte 250, des Reflektoreinsatzes 240, der Platine 260 und des Leuchtmittels 230. Die Grundplatte 250 weist eine erste Innenseite 249.1 und die erste Außenseite 249.2 auf. Die erste Außenseite 249.2 ist die abgewandte Seite der ersten Innenseite 249.1. Die erste Innen- und Außenseite 249.1, 249.2, die den mantelförmig umlaufenden Teil der Grundplatte 250 bilden, erstrecken sich über die Länge l₂ und fassen im Inneren den Reflektoreinsatz 240. Der Reflektoreinsatz 240 weist die Kammern 242, von denen Fig. 14 vier zu entnehmen sind, auf. Die vier Kammern 242 bilden den mittleren von drei Kammerverbunden 246 und sind mit vertieften Zwischenwänden 148 voneinander getrennt. Die Linse 210 weist den Seitenteil 218 auf, der relativ kurz im Verhältnis zur ersten Innen- und Außenseite 249.1, 249.2 der Grundplatte 250 ausgebildet ist. Der Seitenteil 218 der Linse 210 weist eine Seiteninnenfläche 223.1 und eine Seitenaußenfläche 223.2 auf und liegt auf der Grundplatte 250 auf. Die Mehrzahl von Stegen 220 der Linse 210 ist im Wesentlichen auf der Übergangsinnenfläche 217.1 des Übergangsbereiches 216 angeordnet und erstreckt sich unmittelbar nebeneinanderliegend den Übergangsbereich 216 umlaufend. Im Wesentlichen randseitig in der Grundplatte 250 sind die zwei Fixierungsausnehmungen 264 angeordnet. Die Fixierungsausnehmungen 264 durchdringen die Grundplatte 250 und sind vom Abdeckring 280 auf der oberen Seite abgedeckt.

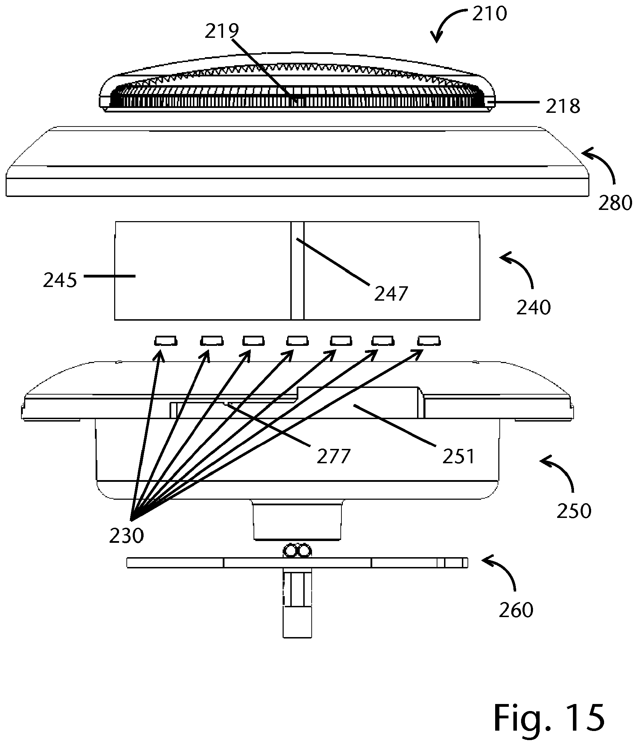

Fig. 15 zeigt die Leuchte 200 gemäß Fig. 9 in einer Seitenexplosionsansicht mit der Linse 210, dem Abdeckring 280, dem Reflektoreinsatz 240, sieben Leuchtmitteln 230, der Grundplatte 250 und der Platine 260. Um eine rotatorische Bewegung der Linse 210 zu unterbinden, weist die Linse 210 auf einer Seiteninnenfläche 223.1, siehe Fig. 14, des Seitenteils 218 einen zweiten Vorsprung 219 beziehungsweise eine Feder einer Feder-/Nut-Verbindung auf. Der Reflektoreinsatz 240 weist in einer Reflektoraußenseite 245 eine Nut 247 auf, in die im montierten Zustand der zweite Vorsprung 219 eingesetzt ist. Die sieben Leuchtmittel 230, die montiert auf der Platine befestigt sind, verdecken in dieser Ansicht drei weitere Leuchtmittel 230. Die Seitenexplosionsansicht veranschaulicht eine der beiden zweiten Lücken 251 der Grundplatte 250. Zusammen mit den zweiten Knaggen 284, Fig. 15 nicht zu entnehmen, des Abdeckrings 280 bilden die zweiten Lücken 251 die zweite Bajonettbefestigung 290. Die zweite Lücke 251 weist die Ausnehmung und Hinterschneidung auf, in die die Knagge bei der Montage greift. Im Bereich der Hinterschneidung ist ein Rastmittel 277 angeordnet, das die Knagge montiert in einer Entstellung hält.

Die in den Figuren dargestellten Ausführungsformen sind nicht beschränkend auszulegen. Vielmehr können dort beschriebene Merkmale untereinander und mit den zuvor beschriebenen Merkmalen zu weiteren Ausgestaltungen kombiniert werden. So kann die Leuchte beispielsweise eine Kombination der Ausführungsformen 1 und 2 sein. Unter anderem kann eine Leuchte mehrere Bajonettbefestigungen aufweisen, die beispielsweise eine Grundplatte mit einer Montageplatte verbindet und/oder eine Grundplatte mit einem Abdeckring verbindet. Weiter kann eine Linse auf einem Seitenteil auf einer Seiteninnenfläche und auf einer Seitenaußenfläche jeweils einen Vorsprung beziehungsweise eine Feder einer Feder-/Nut-Verbindung aufweisen. Entsprechend weist ein Reflektoreinsatz eine Nut für die Feder auf der Seiteninnenfläche auf und eine Grundplatte weist eine Nut für die Feder auf der Seitenaußenfläche auf. Des Weiteren beschränkt sich die Erfindung nicht auf den einachsigen Grenzstrahlungswinkel, vielmehr ist hierunter eine Art dreidimensionaler Lichtkegel zu verstehen, der durch den weiten Grenzstrahlungswinkel und bevorzugt mehreren Leuchtmitteln nicht mehr als solcher zu erkennen ist. Die in der Figurenbeschreibung und den Ansprüchen angegebenen Bezugszeichen beschränken den Schutzbereich der vorliegenden Erfindung nicht, sondern verweisen lediglich auf die in den Figuren gezeigten Ausführungsformen.

## Patentansprüche

1. Leuchte (100, 200) umfassend mindestens ein Leuchtmittel (130, 230), einen Reflektoreinsatz (140, 240), umfassend mindestens eine in diesen teilweise oder vollständig eingelassene Kammer (142, 242), als auch eine Linse (110, 210), wobei die Linse (110, 210) mindestens einen Kopfteil (114, 214), einen Übergangsbereich (116, 216) und einen Seitenteil (118, 218) aufweist, wobei der Kopfteil (114, 214) der Linse (110, 210) ein Reflektorband (122, 222) umfasst, das mittig über dem Kopfteil (114, 214) verläuft, und die Linse (110, 210) mindestens im Übergangsbereich (116, 216), der den Kopfteil (114, 214) mit dem Seitenteil (118, 218) der Linse (110, 210) verbindet, eine Mehrzahl von Stegen (120, 220) umfasst, die sich mit ihrer Längserstreckung im Wesentlichen vom Seitenteil (118, 218) in Richtung des Kopfteils (114, 214) erstrecken, wobei die Stege (120, 220) eine Steginnenseite (121.1, 221.1) und eine Stegaußenseite (121.2, 221.2) umfassen, die gegenüberliegend angeordnet sind, wobei die Steginnenseite (121.1, 221.1) konvex und die Stegaußenseite (121.2, 221.2) konkav ausgebildet ist.

2. Leuchte (100, 200) gemäß Anspruch 1, **dadurch gekennzeichnet, dass** der Übergangsbereich (116, 216) der Linse (110, 210) abgerundet ausgebildet ist.

3. Leuchte (100, 200) gemäß einem oder mehreren der vorherigen Ansprüche, **dadurch gekennzeichnet, dass** in Richtung einer z-Achse, die rechtwinklig durch den Mittelpunkt einer Kopfaußenfläche des Kopfteils (114, 214) verläuft, der Kopfteil (114, 214) der Linse (110, 210) vollständig und der Übergangsbereich (116, 216) der Linse (110, 210) mindestens teilweise höher als mindestens ein Abdeckring (280), der im montierten Zustand randseitig an die Linse (110, 210) angelegt ist, angeordnet sind.

4. Leuchte (100, 200) gemäß einem oder mehreren der vorherigen Ansprüche, **dadurch gekennzeichnet, dass** ein erster Radius (r₁) der Steginnenseite (121.1, 221.1) kleiner ist als ein zweiter Radius (r₂) der Stegaußenseite (121.2, 221.2).

5. Leuchte (100, 200) gemäß einem oder mehreren der vorherigen Ansprüche, **dadurch gekennzeichnet, dass** eine Dicke (d) der Stege (120, 220) im Übergangsbereich (116, 216), die den Abstand von einer Spitze der Steginnenseite zu einem Tal der Stegaußenseite beschreibt, in Richtung des Kopfteils (114, 214) abnimmt.

6. Leuchte (100, 200) gemäß einem oder mehreren der vorherigen Ansprüche, **dadurch gekennzeichnet, dass** sich die Stege (120, 220) der Linse (110, 210) im Wesentlichen vollständig über eine Länge (I) des Seitenteils (118, 218) erstrecken.

7. Leuchte (100, 200) gemäß einem oder mehreren der vorherigen Ansprüche, **dadurch gekennzeichnet, dass** die Stege der Linse (110, 210) auf einer Innenfläche ausgebildet sind, wobei die Innenfläche mindestens einer Übergangsinnenfläche (117.1, 217.1) des Übergangsbereiches (116, 216) zugeordnet ist.

8. Leuchte (100, 200) gemäß einem oder mehreren der vorherigen Ansprüche, **dadurch gekennzeichnet, dass** eine Kopfinnenfläche (115.1, 215.1) und eine Kopfaußenfläche (115.2, 215.2) des Kopfteils (114, 214) sich im Wesentlichen parallel zueinander nach außen vom Seitenteil (118, 218) entfernend wölben.

9. Leuchte (100, 200) gemäß einem oder mehreren der vorhergehenden Ansprüchen, **dadurch gekennzeichnet, dass** die Längserstreckung des Reflektorbands (122, 222) in etwa parallel zur Längserstreckung mindestens eines Kammerverbundes (146, 246) aus zwei bis fünf in einen Reflektoreinsatz (140, 240) teilweise oder vollständig eingelassenen Kammern des Reflektoreinsatzes (140, 240) verläuft.

10. Leuchte (100, 200) gemäß einem oder mehreren der vorherigen Ansprüche, **dadurch gekennzeichnet, dass** mindestens eine Grundplatte (150, 250), die im montierten Zustand gemeinsam mit der Linse (110, 210) ein Gehäuse bildet, eine Mehrzahl von Knaggen (152) und/oder Lücken (251) einer Bajonettbefestigung (190, 290) aufweist.

11. Linse (110, 210), mindestens aufweisend einen Kopfteil (114, 214), einen Übergangsbereich (116, 216) und ein Seitenteil (118, 218), wobei die Linse (110, 210) mindestens im Übergangsbereich (116, 216), der den Kopfteil (114, 214) mit dem Seitenteil (118, 218) der Linse (110, 210) verbindet, eine Mehrzahl von Stegen (120, 220) umfasst, die sich mit ihrer Längserstreckung im Wesentlichen vom Seitenteil (118, 218) in Richtung des Kopfteils (114, 214) erstrecken, wobei die Stege (120, 220) eine Steginnenseite (121.1, 221.1) und eine Stegaußenseite (121.2, 221.2) umfassen, die gegenüberliegend angeordnet sind, wobei die Steginnenseite (121.1, 221.1) konvex und die Stegaußenseite (121.2, 221.2) konkav ausgebildet ist, wobei der Kopfteil (114, 214) der Linse (110, 210) ein Reflektorband (122, 222) umfasst, das mittig über dem Kopfteil (114, 214) verläuft, zur Verwendung in einer Leuchte (100, 200) gemäß einem oder mehreren der Ansprüche 1 bis 10.

12. Verfahren zur Abgabe von Licht mit einer Leuchte (100, 200) gemäß einem oder mehreren der Ansprüche 1 bis 10, **dadurch gekennzeichnet, dass** das Licht mindestens eines Leuchtmittels (130, 230) in einer oder mehreren in einen Reflektoreinsatz (140, 240) teilweise oder vollständig eingelassenen Kammern (142, 242), dem Reflektorband (122, 222) und in dem Übergangsbereich (116, 216) der Linse (110, 210) umgelenkt, reflektiert und gebrochen wird, so dass das Licht in einem Grenzstrahlungswinkel von etwa 70° bis etwa 110° um die Leuchte (100, 200) strahlt.

## Claims

1. Luminaire (100, 200) comprising at least one illuminant {130, 230), a reflector insert (140, 240) comprising at least one chamber (142, 242) partially or completely embedded therein, as well as a lens (110, 210), wherein the lens (110, 210) has at least a head part (114, 214), a transition region (116, 216) and a side part (118, 218), wherein the head part (114, 214) of the lens (110, 210) comprises a reflector strip (122, 222) extending centrally above the head part (114, 214), and the lens (110, 210) comprises, at least in the transition region (116, 216) connecting the head part (114, 214) to the side part (118, 218) of the lens (110, 210), a plurality of bars (120, 220) which extend with their longitudinal extension substantially from the side part (118, 218) in the direction of the head part (114, 214), wherein the bars (120, 220) comprise a bar inner side (121.1, 221.1) and a bar outer side (121.2, 221.2) which are arranged opposite each other, wherein the bar inner side (121.1, 221.1) is convex and the bar outer side (121.2, 221.2) is concave.

2. Luminaire (100, 200) according to claim 1, **characterized in that** the transition region (116, 216) of the lens (110, 210) is rounded.

3. Luminaire (100, 200) according to one or more of the preceding claims, **characterized in that**, in the direction of a z-axis extending rectangularly through the center of a head outer surface of the head part (114, 214), the head part (114, 214) of the lens (110, 210) is arranged completely and the transition region (116, 216) of the lens (110, 210) is arranged at least partially higher than at least one cover ring (280) which, in the assembled state, is applied to the edge of the lens (110, 210).

4. Luminaire (100, 200) according to one or more of the preceding claims, **characterized in that** a first radius (r1) of the bar inner side (121.1, 221.1) is smaller than a second radius (r2) of the bar outer side (121.2, 221.2).

5. Luminaire (100, 200) according to one or more of the preceding claims, **characterized in that** a thickness (d) of the bars (120, 220) in the transition region (116, 216), which describes the distance from a tip of the bar inner side to a valley of the bar outer side, decreases in the direction of the head part (114, 214).

6. Luminaire (100, 200) according to one or more of the preceding claims, **characterized in that** the bars (120, 220) of the lens (110, 210) extend substantially completely over a length (1) of the side part (118, 218).

7. Luminaire (100, 200) according to one or more of the preceding claims, **characterized in that** the bars of the lens (110, 210) are formed on an inner surface, the inner surface being associated with at least one transition inner surface (117.1, 217.1) of the transition region (116, 216).

8. Luminaire (100, 200) according to one or more of the preceding claims, **characterized in that** a head inner surface (115.1, 215.1) and a head outer surface (115.2, 215.2) of the head part (114, 214) bulge outwardly away from the side part (118, 218) substantially parallel to each other.

9. Luminaire (100, 200) according to one or more of the preceding claims, **characterized in that** the longitudinal extent of the reflector strip (122, 222) runs approximately parallel to the longitudinal extent of at least one chamber composite (146, 246) comprising two to five chambers of the reflector insert (140, 240) which are partially or completely recessed in a reflector insert (140, 240).

10. Luminaire (100, 200) according to one or more of the preceding claims, **characterized in that** at least one base plate (150, 250), which in the assembled state forms a housing together with the lens (110, 210), has a plurality of nips (152) and/or gaps (251) of a bayonet mounting (190, 290).

11. Lens (110, 210), at least comprising a head part (114, 214), a transition region (116, 216) and a side part (118, 218), wherein the lens (110, 210) comprises, at least in the transition region (116, 216) which connects the head part (114, 214) to the side part (118, 218) of the lens (110, 210), a plurality of bars (120, 220) which extend with their longitudinal extension substantially from the side part (118, 218) in the direction of the head part (114, 214, the bars (120, 220) having a bar inner side (121. 1, 221.1) and a bar outer side (121.2, 221.2), which are arranged opposite each other, wherein the bar inner side (121.1, 221.1) is convex and the bar outer side (121.2, 221.2) is concave, wherein the head part (114, 214) of the lens (110, 210) comprises a reflector strip (122, 222) extending centrally above the head part (114, 214), for use in a luminaire (100, 200) according to one or more of claims 1 to 10.

12. Method for emitting light with a luminaire (100, 200) according to one or more of claims 1 to 10, **characterized in that** the light of at least one illuminant (130, 230) is deflected, reflected and refracted in one or more chambers (142, 242), the reflector strip (122, 222), and in the transition region (116, 216) of the lens (110, 210), so that the light radiates at a cutoff angle of about 70° to about 110° around the luminaire (100, 200).

## Revendications

1. Luminaire (100, 200) comprenant au moins une source lumineuse (130, 230), un module réflecteur (140, 240) comprenant au moins une chambre (142, 242) partiellement ou complètement encastrée dans celui-ci, ainsi qu'une lentille (110, 210), dans lequel ladite lentille (110, 210) comprend au moins une partie de tête (114, 214), une zone de transition (116, 216) et une partie latérale (118, 218), dans lequel ladite partie de tête (114, 214) de ladite lentille (110, 210) comprend une bande réfléchissante (122, 222) s'étendant centralement au-dessus de ladite partie de tête (114, 214), et ladite lentille (110, 210) comprend au moins dans ladite zone de transition (116, 216) reliant ladite partie de tête (114, 214) à ladite partie latérale (118, 218) de ladite lentille (110, 210), une pluralité de barrettes (120, 220) s'étendant longitudinalement sensiblement depuis ladite partie latérale (118, 218) en direction de ladite partie de tête (114, 214), dans lequel lesdites barrettes (120, 220) comprennent un côté intérieur (121.1, 221.1) de barrette et un côté extérieur (121.2, 221.2) de barrette, qui sont disposés à l'opposé l'un de l'autre, dans lesquels ledit côté intérieur de barrette (121.1, 221.1) est de forme convexe et ledit côté externe (121.2, 221.2) est de forme concave.

2. Luminaire (100, 200) selon la revendication 1, **caractérisé en ce que** ladite zone de transition (116, 216) de ladite lentille (110, 210) est de forme arrondie.

3. Luminaire (100, 200) selon une ou plusieurs des revendications précédentes, **caractérisé en ce que**, en direction d'un axe z passant perpendiculairement par le centre d'une surface extérieure de tête de la partie de tête (114, 214), la partie de tête (114, 214) de la lentille (110, 210) est disposée complètement plus haut qu'au moins un anneau de recouvrement (280) et ladite zone de transition (116, 216) de ladite lentille (110, 210) est disposée au moins partiellement plus haut qu'au moins ledit anneau de recouvrement (280) qui, à l'état monté, est appliquée sur le bord à ladite lentille (110, 210).

4. Luminaire (100, 200) selon l'une ou plusieurs des revendications précédentes, **caractérisé en ce qu'**un premier rayon (r₁) dudit coté intérieur (121.1, 221.1) de barrette est inférieur à un deuxième rayon (r₂) dudit côté extérieur (121.2, 221.2) de barrette.

5. Luminaire (100, 200) selon une ou plusieurs des revendications précédentes, **caractérisé en ce qu'**une épaisseur (d) de ladite barrette (120, 220) dans ladite zone de transition (116, 216), qui décrit la distance entre un sommet dudit côté intérieur de barrette et un creux dudit côté extérieur de barrette, diminue en direction de ladite partie de tête (114, 214).

6. Luminaire (100, 200) selon une ou plusieurs des revendications précédentes, **caractérisé en ce que** les barrettes (120, 220) de la lentille (110, 210) s'étendent sensiblement complètement sur toute une longueur (I) de ladite partie latérale (118, 218).

7. Luminaire (100, 200) selon une ou plusieurs des revendications précédentes, **caractérisé en ce que** les barrettes de la lentille (110, 210) sont réparties sur une surface intérieure, ladite surface intérieure étant associée à au moins une surface intérieure de transition (117.1, 217.1) de ladite zone de transition (116, 216).

8. Luminaire (100, 200) selon une ou plusieurs des revendications précédentes, **caractérisé en ce qu'**une surface de tête intérieure (115.1, 215.1) et une surface de tête extérieure (115.2, 215.2) de ladite partie de tête (114, 214) s'incurvent vers l'extérieur en s'éloignant de ladite partie latérale (118, 218) sensiblement parallèlement l'une à l'autre.

9. Luminaire (100, 200) selon l'une ou plusieurs des revendications précédentes, **caractérisé en ce que** l'étendue longitudinale de ladite bande réfléchissante (122, 222) s'étend approximativement parallèlement à l'étendue longitudinale d'au moins un ensemble de chambres (146, 246) de deux à cinq chambres dudit module réflecteur (140, 240) qui sont partiellement ou complètement encastrées dans ledit module réflecteur (140, 240).

10. Luminaire (100, 200) selon une ou plusieurs des revendications précédentes, **caractérisé en ce qu'**au moins une plaque de base (150, 250) qui, à l'état monté, forme avec ladite lentille (110, 210) un boîtier, présente une pluralité d'encoches (152) et/ou de fentes (251) d'une fixation à baïonnette (190, 290).

11. Lentille (110, 210) comprenant au moins une partie de tête (114, 214), une zone de transition (116, 216) et une partie latérale (118, 218), ladite lentille (110, 210) comprenant, au moins dans ladite zone de transition (116, 216) reliant ladite partie de tête (114, 214) à ladite partie latérale (118, 218) de la lentille (110, 210), une pluralité de barrettes (120, 220) s'étendant longitudinalement sensiblement à partir de ladite partie latérale (118, 218) dans la direction de ladite partie latérale (118, 218), les barrettes (120, 220) comprennent un côté intérieur (121.1, 221.1) de barrette et un côté extérieur (121.2, 221.2) de barrette qui sont disposés à l'opposé l'un de l'autre, ledit côté intérieur (121.1, 221.1) de barrette étant de forme convexe et ledit côté extérieur (121.2, 221.2) de barrette étant de forme concave, dans lequel ladite partie de tête (114, 214) de ladite lentille (110, 210) comprend une bande réfléchissante (122, 222) qui est disposée de manière centrale sur ladite lentille (110, 210) pour une utilisation dans un luminaire (100, 200) conformément à une ou plusieurs des revendications 1 à 10.

12. Procédé d'émission de lumière avec un luminaire (100, 200) selon une ou plusieurs des revendications 1 à 10, **caractérisé en ce que** ladite lumière d'au moins une source lumineuse (130, 230) est déviée, réfléchie et réfractée dans une ou plusieurs chambres (142, 242) partiellement ou totalement encastré dans un module de réflecteur (140, 240), dans ladite bande réfléchissante (122, 222) et dans ladite zone de transition (116, 216) de ladite lentille (110, 210), de sorte que ladite lumière rayonne à un angle de faisceau limite d'environ 70° à environ 110° autour dudit luminaire (100, 200).
